# EUROPEAN PATENT APPLICATION

(11) **EP 4 521 543 A1**
(43) Date of publication of application: **12.03.2025**
(21) Application number: 24193884.4
(22) Date of filing: 09.08.2024
(51) Int. Cl.: H01M 50/533, H01M 50/48, H01M 50/147, H01M 50/186, H01M 50/474, H01M 50/477, H01M 50/103, H01M 50/15

(54) **METHOD OF MANUFACTURING SECONDARY BATTERY AND SECONDARY BATTERY**

(30) Priority: 11.09.2023 JP 2023147001
(71) Applicant: Prime Planet Energy & Solutions, Inc., Chuo-ku Tokyo 103-0022 (JP)
(72) Inventor: WAKIMOTO, Ryoichi, Tokyo, 103-0022 (JP); IMANISHI, Hiroaki, Tokyo, 103-0022 (JP)
(74) Representative: Kuhnen & Wacker Patent- und Rechtsanwaltsbüro PartG mbB

(57) **Abstract**

In the present secondary battery, a first spacer (600) is disposed in a first opening of a case main body between a first sealing plate and an electrode assembly, the first spacer (600) includes a first protrusion (616) facing the first electrode tab (220), and the first electrode tab (220) is curved and bent to be provided with a recess (221a) recessed at a position facing the first protrusion (616). With this configuration, an energy density of the secondary battery can be improved, thereby stably manufacturing the secondary battery.

## Description

### CROSS REFERENCE TO RELATED APPLICATIONS

This nonprovisional application is based on Japanese Patent Application No. 2023-147001 filed on September 11, 2023 with the Japan Patent Office, the entire contents of which are hereby incorporated by reference.

### BACKGROUND OF THE INVENTION

### Field of the Invention

The present technology relates to a method of manufacturing a secondary battery and the secondary battery.

### Description of the Background Art

Japanese Patent No. 4537353 discloses a prismatic secondary battery in which an electrode group (25) is accommodated in a case (14) provided with openings (14a, 14b) at both ends thereof and electrode terminals (21, 23) are respectively attached to cap plates (33, 33') that seal the openings (14a, 14b).

### SUMMARY OF THE INVENTION

In the secondary battery described in Japanese Patent No. 4537353, there is room for attaining improved energy density and stable manufacturing of the secondary battery.

The present technology has been made to solve the above-described problem, and has an object to provide a method of manufacturing a secondary battery and the secondary battery so as to attain improved energy density and stable manufacturing thereof.

The present technology provides the following secondary battery.
[1] A secondary battery comprising: an electrode assembly including a first electrode and a second electrode having a polarity different from a polarity of the first electrode; and a case that accommodates the electrode assembly, wherein the case includes a case main body provided with a first opening at one end portion of the case main body, and a first sealing plate that seals the first opening, the electrode assembly has a first electrode tab and a third electrode tab that are each electrically connected to the first electrode and that are each located at an end portion of the electrode assembly on the first sealing plate side, the first electrode tab and the third electrode tab are electrically connected to the first electrode in a state in which each of the first electrode tab and the third electrode tab is curved, the first electrode tab is provided with a first recess recessed in the state in which the first electrode tab is curved, the third electrode tab is provided with a third recess recessed in the state in which the third electrode tab is curved, a first spacer is disposed in the first opening of the case main body between the first sealing plate and the electrode assembly, the first spacer is provided with a first protrusion facing the first electrode tab, and the first protrusion is located to face the first recess.
[2] The secondary battery according to [1], wherein the first recess is provided in an outer surface of the first electrode tab on the case main body side, the third recess is provided in an outer surface of the third electrode tab on the case main body side, the first spacer is located between the case main body and the first electrode tab, and the first spacer is not located between the case main body and the third electrode tab.
[3] The secondary battery according to [1] or [2], wherein the first electrode tab and the third electrode tab are electrically connected to the first electrode in a state in which the first electrode tab and the third electrode tab are curved in opposite directions.
[4] The secondary battery according to any one of [1] to [3], wherein the first spacer is provided with a second protrusion facing the third electrode tab, and the second protrusion is located to face the second recess.
[5] The secondary battery according to [4], wherein the first recess is provided in an outer surface of the first electrode tab on the case main body side, the third recess is provided in an outer surface of the third electrode tab on the case main body side, and the first spacer is located between the case main body and the first electrode tab and is located between the case main body and the third electrode tab.
[6] The secondary battery according to any one of [1] to [5], wherein the first recess is provided in an outer surface of the first electrode tab on the third electrode tab side, the third recess is provided in an outer surface of the third electrode tab on the first electrode tab side, and the first spacer is disposed between the first electrode tab and the third electrode tab.
[7] The secondary battery according to any one of [1] to [6], wherein the first electrode tab has a first curved portion in an outer surface of the first electrode tab in which the first recess is formed, the first curved portion being located on the first sealing plate side with respect to the first recess, and the third electrode tab has a second curved portion in an outer surface of the third electrode tab in which the third recess is formed, the second curved portion being located on the first sealing plate side with respect to the third recess.
[8] The secondary battery according to any one of [1] to [7], wherein the electrode assembly and the first spacer are wrapped by an insulating sheet, and the insulating sheet is connected to the first spacer.
[9] The secondary battery according to any one of [1] to [8], wherein the case includes a second sealing plate, the case main body is provided with a second opening at an end portion of the case main body opposite to the first opening, the second opening is sealed by the second sealing plate, the electrode assembly has a second electrode tab and a fourth electrode tab that are each electrically connected to the second electrode and that are each located at an end portion of the electrode assembly on the second sealing plate side, and the second electrode tab and the fourth electrode tab are electrically connected to the second electrode in a state in which each of the second electrode tab and the fourth electrode tab is curved.
[10] The secondary battery according to [9], wherein the second electrode tab is provided with a second recess recessed in the state in which the second electrode tab is curved, the fourth electrode tab is provided with a fourth recess recessed in the state in which the fourth electrode tab is curved, a second spacer is disposed in the second opening of the case main body between the second sealing plate and the electrode assembly, the second spacer is provided with a second protrusion facing the second electrode tab and a fourth protrusion facing the fourth electrode tab, the second protrusion is located to face the second recess, and the fourth protrusion is located to face the fourth recess.
   The present technology provides the following secondary battery.
[11] A method of manufacturing a secondary battery, the secondary battery comprising: an electrode assembly including a first electrode and a second electrode having a polarity different from a polarity of the first electrode; and a case that accommodates the electrode assembly, wherein the case includes a case main body provided with a first opening at one end portion of the case main body, and a first sealing plate that seals the first opening, the electrode assembly includes a first electrode tab and a third electrode tab that are each electrically connected to the first electrode and that are each located at an end portion of the electrode assembly on the first sealing plate side, the first electrode tab and the third electrode tab are electrically connected to the first electrode in a state in which each of the first electrode tab and the third electrode tab is curved, the first electrode tab is provided with a first recess recessed in the state in which the first electrode tab is curved, the third electrode tab is provided with a third recess recessed in the state in which the third electrode tab is curved, a first spacer is disposed in the first opening of the case main body between the first sealing plate and the electrode assembly, the first spacer is provided with a first protrusion facing the first electrode tab, and the first protrusion is located to face the first recess, the method comprising: connecting the first electrode tab and the third electrode tab to the first sealing plate; and by bringing the first sealing plate and the main body portion of the electrode assembly close to each other after the connecting the first electrode tab and the third electrode tab to the first sealing plate, curving the first electrode tab to form the first recess and curving the third electrode tab to form the third recess.
[12] The method of manufacturing the secondary battery according to [11], wherein in the curving the first electrode tab and curving the third electrode tab, the first recess is formed with the first protrusion of the first spacer being in contact with the first electrode tab.
[13] The method of manufacturing the secondary battery according to [11] or [12], wherein the first spacer is provided with a second protrusion facing the third electrode tab, and in the curving the first electrode tab and curving the third electrode tab, the second recess is formed with the second protrusion of the first spacer being in contact with the third electrode tab.
[14] The method of manufacturing the secondary battery according to any one of [11] to [13], wherein in the curving the first electrode tab and curving the third electrode tab, the second recess is formed with a jig being in contact with the third electrode tab.
[15] The method of manufacturing the secondary battery according to any one of [11] to [14], comprising disposing the first spacer on an end surface of the electrode assembly on a side on which the first electrode tab and the third electrode tab are provided, and covering the electrode assembly and the first spacer with an insulating sheet.
[16] The method of manufacturing the secondary battery according to any one of [11] to [15], wherein the secondary battery is configured such that the case includes a second sealing plate, the case main body is provided with a second opening at an end portion of the case main body opposite to the first opening, the second opening is sealed by the second sealing plate, the electrode assembly has a second electrode tab and a fourth electrode tab that are each electrically connected to the second electrode and that are each located at an end portion of the electrode assembly on the second sealing plate side, the second electrode tab and the fourth electrode tab are electrically connected to the second electrode in a state in which each of the second electrode tab and the fourth electrode tab is curved, the second electrode tab is provided with a second recess recessed in the state in which the second electrode tab is curved, the fourth electrode tab is provided with a fourth recess recessed in the state in which the fourth electrode tab is curved, a second spacer is disposed in the second opening of the case main body between the second sealing plate and the electrode assembly, the second spacer is provided with a second protrusion facing the second electrode tab, and the second protrusion is located to face the second recess, the method comprising curving the second electrode tab with the second protrusion of the second spacer being in contact with the second electrode tab.
[17] The method of manufacturing the secondary battery according to [16], comprising: connecting the second electrode tab and the fourth electrode tab to the second sealing plate; and after the connecting the second electrode tab and the fourth electrode tab to the second sealing plate, inserting the electrode assembly into the case main body via the second opening of the case main body with each of the first electrode tab side and the third electrode tab side being inserted first in a state in which the first sealing plate, the first electrode tab, and the third electrode tab are not connected.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to a first embodiment of the present technology.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1.
Fig. 7 is a front view showing a negative electrode raw plate before a negative electrode plate is formed.
Fig. 8 is a cross sectional view of the negative electrode raw plate shown in Fig. 7 along VIII-VIII.
Fig. 9 is a front view showing the negative electrode plate formed from the negative electrode raw plate.
Fig. 10 is a front view showing a positive electrode raw plate before a positive electrode plate is formed.
Fig. 11 is a cross sectional view of the positive electrode raw plate shown in Fig. 10 along XI-XI.
Fig. 12 is a front view showing the positive electrode plate formed from the positive electrode raw plate.
Fig. 13 is a cross sectional view of the secondary battery shown in Fig. 1 along XIII-XIII.
Fig. 14 is a cross sectional view of the secondary battery shown in Fig. 1 along XIV-XIV.
Fig. 15 is a first perspective view showing an overall configuration of a spacer.
Fig. 16 is a second perspective view showing the overall configuration of the spacer.
Fig. 17 is a flowchart showing a method of manufacturing the secondary battery according to the first embodiment.
Fig. 18 is a perspective view showing a state before two electrode assemblies included in the secondary battery according to the first embodiment are overlapped with each other.
Fig. 19 is a cross sectional view of each of the electrode assemblies and the current collectors shown in Fig. 18 along XIX-XIX.
Fig. 20 is a perspective view showing a state of attaching an insulating sheet and a spacer to the electrode assembly.
Fig. 21 is a diagram showing a state in which the insulating sheet is unfolded.
Fig. 22 is a diagram showing a state in which another insulating sheet is unfolded.
Fig. 23 is a cross sectional view along XXIII-XXIII shown in Fig. 20.
Fig. 24 is a perspective view showing a state of attaching a holder and a spacer to the electrode assembly.
Fig. 25 is a perspective view showing a state of attaching a first sealing plate to a first current collector.
Fig. 26 is a cross sectional view of each of the electrode assemblies and the current collectors shown in Fig. 25 along XXVI-XXVI.
Fig. 27 is a perspective view showing a state of inserting the electrode assemblies into a case main body.
Fig. 28 is a perspective view showing a state of attaching a second sealing plate to a second current collector.
Fig. 29 is a cross sectional view of each of the electrode assemblies and the current collectors shown in Fig. 28 along XXIX-XXIX.
Fig. 30 is a perspective view showing the configuration of the secondary battery according to the first embodiment.
Fig. 31 is a cross sectional view of the secondary battery according to the second embodiment as corresponding to the cross section of each of the electrode assemblies and the current collectors shown in Fig. 25 along XXVI-XXVI.
Fig. 32 is a cross sectional view showing a state of bending electrode tabs.
Fig. 33 is a first perspective view showing an overall configuration of a spacer according to the second embodiment.
Fig. 34 is a second perspective view showing the overall configuration of the spacer according to the second embodiment.
Fig. 35 is a perspective view showing an overall configuration of a spacer according to a third embodiment.
Fig. 36 is a cross sectional view corresponding to XIII-XIII in Fig. 1 according to a fourth embodiment.
Fig. 37 is a first perspective view showing an overall configuration of a spacer according to the fourth embodiment.
Fig. 38 is a second perspective view showing the overall configuration of the spacer according to the fourth embodiment.
Fig. 39 is a first perspective view showing an overall configuration of a spacer according to a fifth embodiment.
Fig. 40 is a second perspective view showing the overall configuration of the spacer according to the fifth embodiment.
Fig. 41 is a cross sectional view corresponding to the cross section of each of the electrode assemblies and the current collectors shown in Fig. 25 along XXVI-XXVI.
Fig. 42 is a cross sectional view corresponding to the cross section of the secondary battery shown in Fig. 1 along XIII-XIII.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "secondary battery" is not limited to a lithium ion battery, and may include other secondary batteries such as a nickel-metal hydride battery and a sodium-ion battery. In the present specification, the term "electrode" may collectively represent a positive electrode and a negative electrode.

It should be noted that in each of the figures, the X direction is defined to represent a direction along a winding axis of an electrode assembly included in the secondary battery, the Y direction is defined to represent a short-side direction of the electrode assembly when viewed in the X direction, and the Z direction is defined to represent a long-side direction of the electrode assembly when viewed in the X direction. Further, in order to facilitate understanding of the invention, the size of each configuration in the figures may be illustrated to be changed from its actual size.

In the specification of the present application, the first direction (X direction) may be referred to as a "width direction" of the secondary battery or the case main body, the second direction (Y direction) may be referred to as a "thickness direction" of the secondary battery or the case main body, and the third direction (Z direction) may be referred to as a "height direction" of the secondary battery or the case main body.

### (First Embodiment)

### (Overall Configuration of Battery)

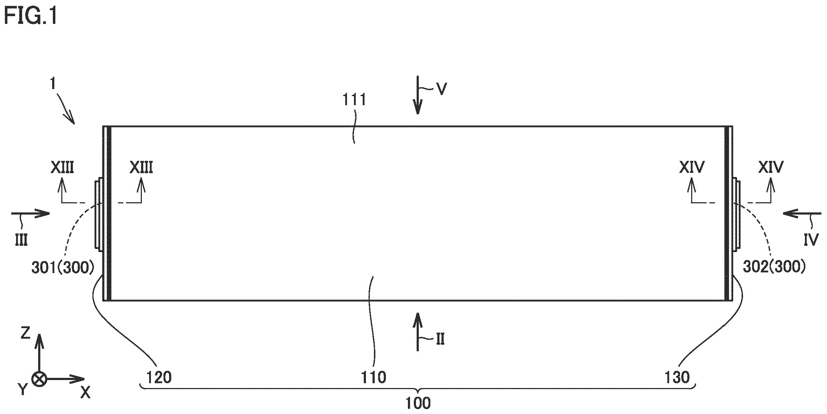

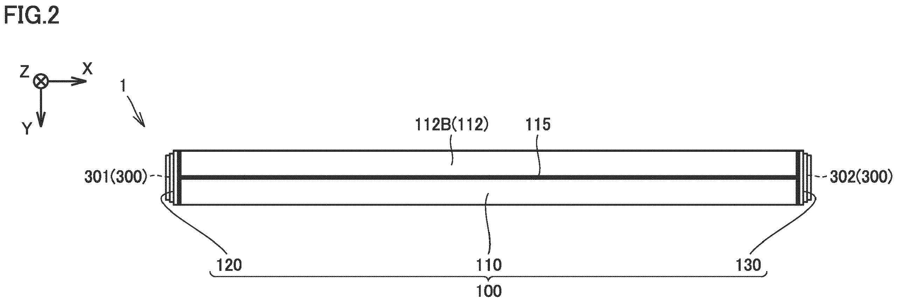

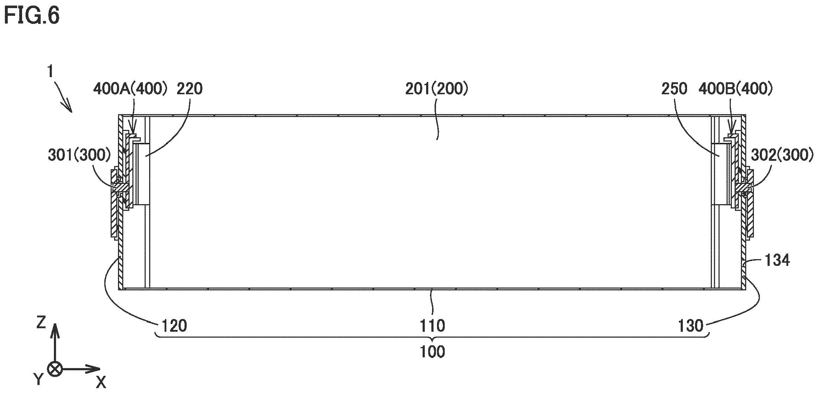

Fig. 1 is a front view of a secondary battery 1 according to the present embodiment. Figs. 2 to 5 are diagrams showing states of secondary battery 1 shown in Fig. 1 when viewed in directions of arrows II, III, IV, and V respectively. Fig. 6 is a front cross sectional view of secondary battery 1 shown in Fig. 1. It should be noted that in the cross sectional view shown in Fig. 6, a below-described spacer 600 is not shown for ease of description.

Secondary battery 1 can be mounted on a battery electric vehicle (BEV), a plug-in hybrid electric vehicle (PHEV), a hybrid electric vehicle (BEV), or the like. It should be noted that the purpose of use of secondary battery 1 is not limited to the use on a vehicle.

As shown in Figs. 1 to 6, secondary battery 1 includes a case 100, an electrode assembly 200, electrode terminals 300, and current collectors 400. Case 100 includes a case main body 110, a first sealing plate 120, and a second sealing plate 130.

When forming a battery assembly including secondary battery 1, a plurality of secondary batteries 1 are stacked in the thickness direction of each of the plurality of secondary batteries 1. Secondary batteries 1 stacked may be restrained in the stacking direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

As shown in Figs. 1 and 2, first sealing plate 120 and second sealing plate 130 are provided at respective end portions of the case main body. Case main body 110 can be formed to have a prismatic tubular shape in, for example, the following manner: end sides of a plate-shaped member having been bent are brought into abutment with each other (joining portion 115 illustrated in Fig. 2) and are joined together (for example, laser welding). Each of the corners of the "prismatic tubular shape" may have a shape with a curvature.

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 30 cm or more. In this way, secondary battery 1 can be formed to have a relatively large size (high capacity). The size (height) of case main body 110 in the Z direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 constitute parts of the side surfaces of case 100. The pair of second side surface portions 112 constitute the bottom surface portion and upper surface portion of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 desirably has an area larger than that of each of the pair of second side surface portions 112.

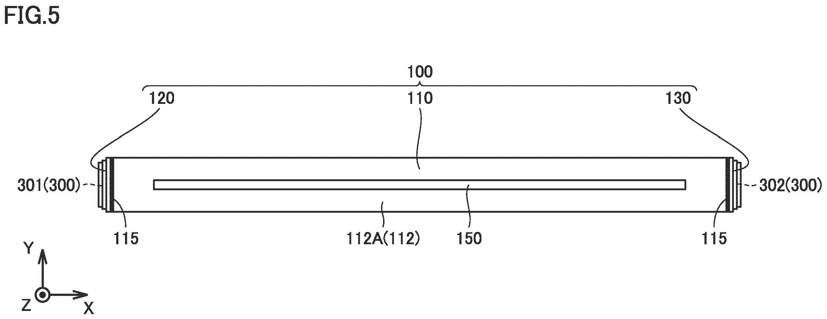

As shown in Fig. 5, a gas-discharge valve 150 is provided in one second side surface portion 112A of the pair of second side surface portions 112. Gas-discharge valve 150 extends in the width direction (X direction) of secondary battery 1. Gas-discharge valve 150 extends from the center of case main body 110 in the X direction to such an extent that gas-discharge valve 150 does not reach both ends of case main body 110 in the X direction. Gas-discharge valve 150 can be changed appropriately.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, joining portion 115 is formed at the other second side surface portion 112B of the pair of second side surface portions 112. Joining portion 115 extends in the width direction (X direction) of secondary battery 1. At joining portion 115, the end sides of the plate-shaped member of case main body 110 are joined to each other.

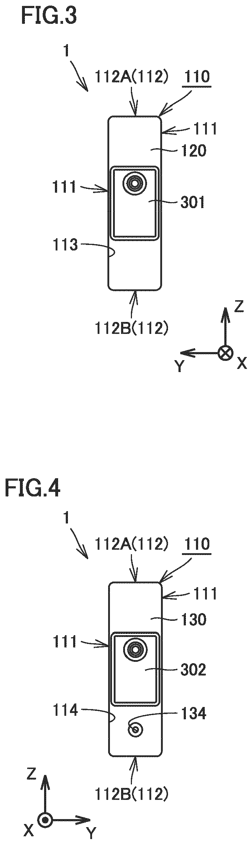

As shown in Fig. 3, a first opening 113 is provided at an end portion of case main body 110 on a first side in the first direction (X direction). First opening 113 is sealed by first sealing plate 120. Joining portion 115 is formed at first opening 113 so as to seal first opening 113. Each of first opening 113 and first sealing plate 120 has a substantially rectangular shape in which the Y direction corresponds to its short-side direction and the Z direction corresponds to its long-side direction.

A negative electrode terminal 301 (first electrode terminal) is provided on first sealing plate 120. The position of negative electrode terminal 301 can be appropriately changed.

As shown in Fig. 4, a second opening 114 is provided at an end portion of case main body 110 on a second side opposite to the first side in the first direction (X direction). That is, second opening 114 is located at the end portion opposite to first opening 113. Second opening 114 is sealed by second sealing plate 130. Joining portion 115 is formed at second opening 114 so as to seal second opening 114. Each of second opening 114 and second sealing plate 130 has a substantially rectangular shape in which the Y direction corresponds to its short-side direction and the Z direction corresponds to its long-side direction.

Second sealing plate 130 is provided with a positive electrode terminal 302 (second electrode terminal) and an injection hole 134. The positions of positive electrode terminal 302 and injection hole 134 can be appropriately changed.

Each of first sealing plate 120 and second sealing plate 130 is composed of a metal. Specifically, each of first sealing plate 120 and second sealing plate 130 is composed of aluminum, an aluminum alloy, iron, an iron alloy, or the like.

Negative electrode terminal 301 is electrically connected to a negative electrode (first electrode) of electrode assembly 200. Negative electrode terminal 301 is attached to first sealing plate 120, i.e., case 100.

Positive electrode terminal 302 is electrically connected to a positive electrode (second electrode) of electrode assembly 200. Positive electrode terminal 302 is attached to second sealing plate 130, i.e., case 100.

Negative electrode terminal 301 is composed of a conductive material (more specifically, a metal), and can be composed of copper, a copper alloy, or the like, for example. A portion or layer composed of aluminum or an aluminum alloy may be provided at a portion of an outer surface of negative electrode terminal 301.

Positive electrode terminal 302 is composed of a conductive material (more specifically, a metal), and can be composed of aluminum, an aluminum alloy, or the like, for example.

Injection hole 134 is sealed by a sealing member (not shown). As the sealing member, for example, a blind rivet or another metal member can be used.

Electrode assembly 200 is an electrode assembly having a flat shape and having a below-described positive electrode plate and a below-described negative electrode plate. Specifically, electrode assembly 200 is a wound type electrode assembly in which a strip-shaped positive electrode plate and a strip-shaped negative electrode plate are both wound with a strip-shaped separator (not shown) being interposed therebetween. It should be noted that in the present specification, the "electrode assembly" is not limited to the wound type electrode assembly, and may be a stacked type electrode assembly in which a plurality of positive electrode plates and a plurality of negative electrode plates are alternately stacked. The strip-shaped separator can be constituted of, for example, a microporous membrane composed of polyolefin. The electrode assembly may include a plurality of positive electrode plates and a plurality of negative electrode plates, respective positive electrode tabs provided in the positive electrode plates may be stacked to form a positive electrode tab group, and respective negative electrode tabs provided in the negative electrode plates may be stacked to form a negative electrode tab group. It should be noted that electrode assembly 200 may include a plurality of wound type electrode assemblies or may include a plurality of stacked type electrode assemblies.

As shown in Fig. 6, case 100 accommodates electrode assembly 200. Fig. 6 illustrates a first electrode assembly 201 described below. First electrode assembly 201 is accommodated in case 100 such that the winding axis thereof is parallel to the X direction.

Specifically, one or a plurality of the wound type electrode assemblies and an electrolyte solution (electrolyte) (not shown) are accommodated inside a below-described insulating sheet 700 disposed in case 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and diethyl carbonate (DEC) at a volume ratio (25°C) of 30:30:40. It should be noted that instead of the electrolyte solution, a solid electrolyte may be used.

First electrode assembly 201 includes: a main body portion (portion in which a positive electrode plate and a negative electrode plate are stacked with a separator being interposed therebetween); a first tab 220 (negative electrode tab group); and a second electrode tab 250 (positive electrode tab group).

The main body portion is constituted of a below-described negative electrode plate 210 and a below-described positive electrode plate 240. First electrode tab 220 is located at an end portion of first electrode assembly 201 on the first side with respect to the main body portion in the first direction (X direction). The first side in the present embodiment is the first sealing plate 120 side. Second electrode tab 250 is located at an end portion of first electrode assembly 201 on the second side with respect to the main body portion in the first direction (X direction). The second side in the present embodiment is the second sealing plate 130 side.

Each of first electrode tab 220 and second electrode tab 250 is formed to protrude from a central portion of electrode assembly 200 toward first sealing plate 120 or second sealing plate 130.

Current collectors 400 include a negative electrode current collector 400A and a positive electrode current collector 400B. Each of negative electrode current collector 400A and positive electrode current collector 400B is constituted of a plate-shaped member. Electrode assembly 200 is electrically connected to negative electrode terminal 301 and positive electrode terminal 302 through current collectors 400.

Negative electrode current collector 400A is disposed on first sealing plate 120 with an insulating member composed of a resin being interposed therebetween. Negative electrode current collector 400A is electrically connected to first electrode tab 220 and negative electrode terminal 301. Negative electrode current collector 400A is composed of a conductive material (more specifically, a metal), and can be composed of copper, a copper alloy, or the like, for example. It should be noted that details of negative electrode current collector 400A will be described later.

Positive electrode current collector 400B is disposed on second sealing plate 130 with an insulating member composed of a resin being interposed therebetween. Positive electrode current collector 400B is electrically connected to second electrode tab 250 and positive electrode terminal 302. Positive electrode current collector 400B is composed of a conductive material (more specifically, a metal), and can be composed of aluminum, an aluminum alloy, or the like, for example. It should be noted that second electrode tab 250 may be electrically connected to second sealing plate 130 directly or via positive electrode current collector 400B. In this case, second sealing plate 130 may serve as positive electrode terminal 302. Moreover, details of positive electrode current collector 400B will be described later.

### (Configuration of Electrode Assembly 200)

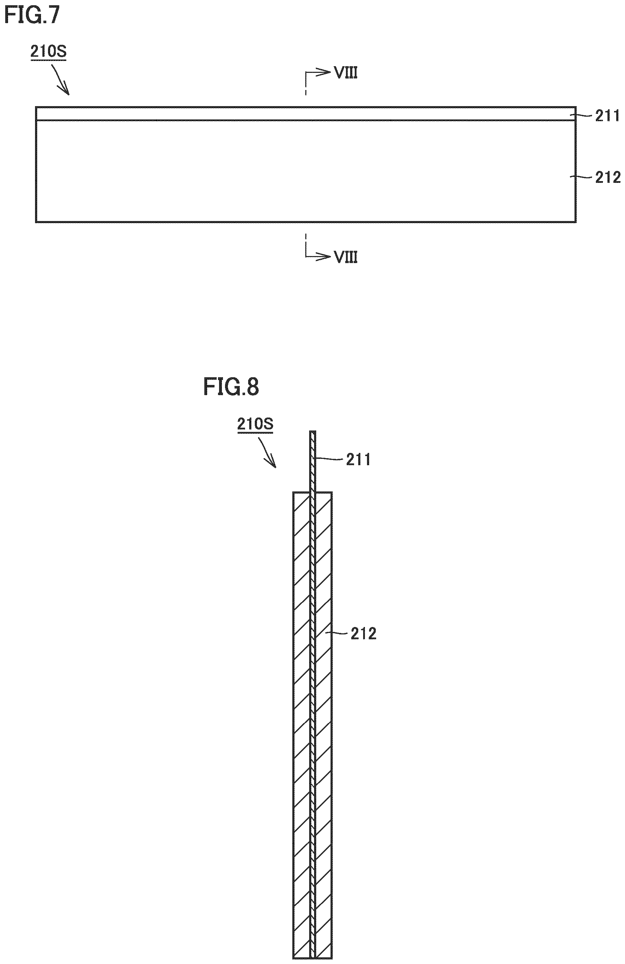

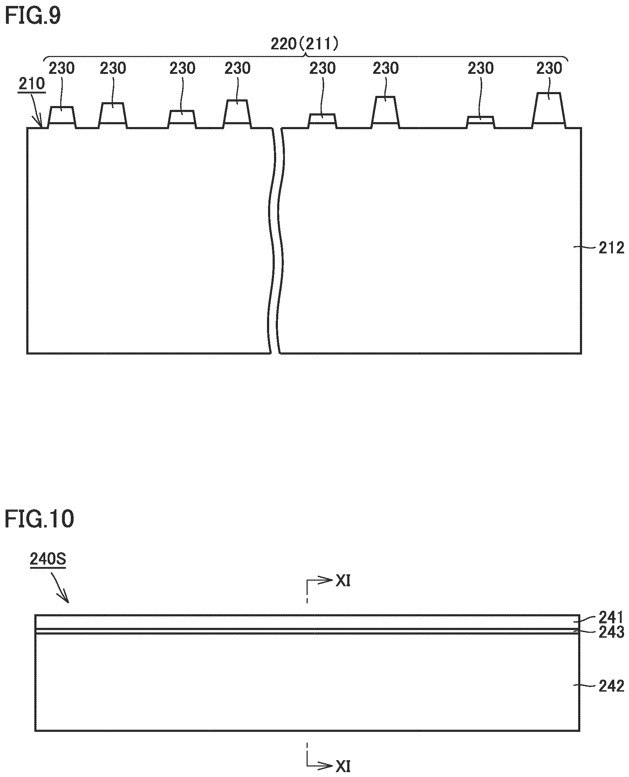

Fig. 7 is a front view showing a negative electrode raw plate 210S before negative electrode plate 210 (first electrode) is formed, Fig. 8 is a cross sectional view of negative electrode raw plate 210S shown in Fig. 7 along VIII-VIII, and Fig. 9 is a front view showing negative electrode plate 210 formed from negative electrode raw plate 210S.

Negative electrode plate 210 is manufactured by processing negative electrode raw plate 210S. As shown in Figs. 7 and 8, negative electrode raw plate 210S includes a negative electrode core body 211 and a negative electrode active material layer 212. Negative electrode core body 211 is a copper foil or a copper alloy foil.

Negative electrode active material layer 212 is formed on negative electrode core body 211 except for each of end portions of both surfaces of negative electrode core body 211 on one side. Negative electrode active material layer 212 is formed by applying a negative electrode active material layer slurry using a die coater.

The negative electrode active material layer slurry is produced by kneading graphite serving as a negative electrode active material, styrene-butadiene rubber (SBR) and carboxymethyl cellulose (CMC) each serving as a binder, and water serving as a dispersion medium such that the mass ratio of the graphite, the SBR, and the CMC is about 98:1:1.

Negative electrode core body 211 having the negative electrode active material layer slurry applied thereon is dried to remove the water included in the negative electrode active material layer slurry, thereby forming negative electrode active material layer 212. Further, by compressing negative electrode active material layer 212, negative electrode raw plate 210S including negative electrode core body 211 and negative electrode active material layer 212 is formed. Negative electrode raw plate 210S is cut into a predetermined shape, thereby forming negative electrode plate 210. Negative electrode raw plate 210S can be cut by laser processing with application of an energy ray, die processing, cutter processing, or the like.

As shown in Fig. 9, a plurality of negative electrode tabs 230 each constituted of negative electrode core body 211 are provided at one end portion, in the width direction, of negative electrode plate 210 formed from negative electrode raw plate 210S. When negative electrode plate 210 is wound, the plurality of negative electrode tabs 230 are stacked to form first electrode tab 220. Thus, first electrode tab 220 is connected to negative electrode plate 210 (first electrode). The position of each of the plurality of negative electrode tabs 230 and the length thereof in the protruding direction are appropriately adjusted in consideration of the state in which first electrode tab 220 is connected to negative electrode current collector 400A. It should be noted that the shape of negative electrode tab 230 is not limited to the one illustrated in Fig. 8.

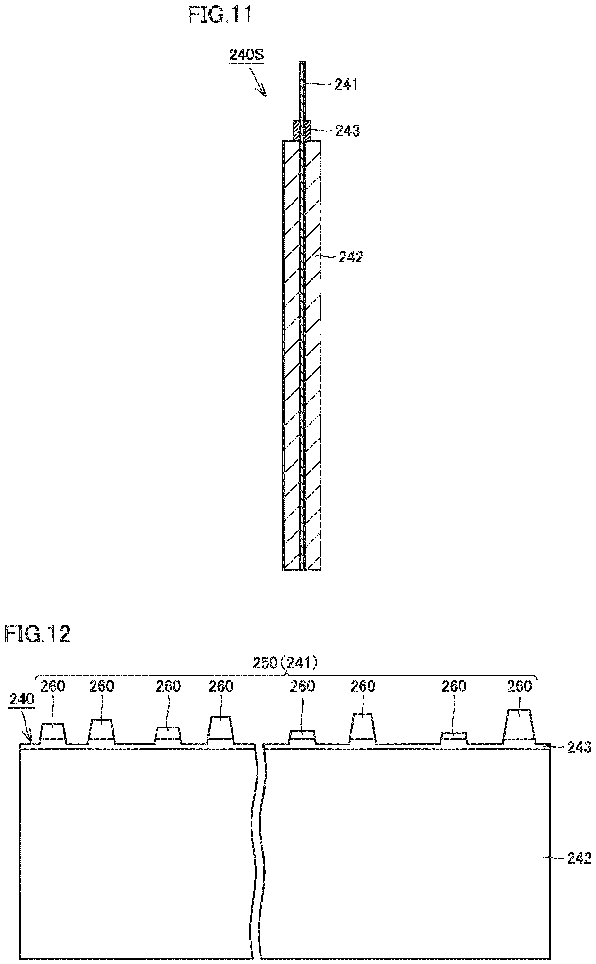

Fig. 10 is a front view showing a positive electrode raw plate 240S before positive electrode plate 240 (second electrode) is formed, Fig. 11 is a cross sectional view of positive electrode raw plate 240S shown in Fig. 10 along XI-XI, and Fig. 12 is a front view showing positive electrode plate 240 formed from positive electrode raw plate 240S.

Positive electrode plate 240 serving as the second electrode has a polarity different from a polarity of negative electrode plate 210 serving as the first electrode. Positive electrode plate 240 is manufactured by processing positive electrode raw plate 240S. As shown in Figs. 10 and 11, positive electrode raw plate 240S includes a positive electrode core body 241, a positive electrode active material layer 242, and a positive electrode protective layer 243. Positive electrode core body 241 is an aluminum foil or an aluminum alloy foil.

Positive electrode active material layer 242 is formed on positive electrode core body 241 except for each of end portions of both surfaces of positive electrode core body 241 on one side. Positive electrode active material layer 242 is formed on positive electrode core body 241 by applying a positive electrode active material layer slurry using a die coater.

The positive electrode active material layer slurry is produced by kneading a lithium-nickel-cobalt-manganese composite oxide serving as a positive electrode active material, polyvinylidene difluoride (PVdF) serving as a binder, a carbon material serving as a conductive material, and N-methyl-2-pyrrolidone (NMP) serving as a dispersion medium such that the mass ratio of the lithium-nickel-cobalt-manganese composite oxide, the PVdF, and the carbon material is about 97.5: 1:1.5.

Positive electrode protective layer 243 is formed in contact with positive electrode core body 241 at an end portion of positive electrode active material layer 242 on the one side in the width direction. Positive electrode protective layer 243 is formed on positive electrode core body 241 by applying a positive electrode protective layer slurry using a die coater. Positive electrode protective layer 243 has an electrical resistance larger than that of positive electrode active material layer 242.

The positive electrode protective layer slurry is produced by kneading alumina powder, a carbon material serving as a conductive material, PVdF serving as a binder, and NMP serving as a dispersion medium such that the mass ratio of the alumina powder, the carbon material, and the PVdF is about 83:3:14.

Positive electrode core body 241 having the positive electrode active material layer slurry and the positive electrode protective layer slurry applied thereon is dried to remove the NMP included in the positive electrode active material layer slurry and the positive electrode protective layer slurry, thereby forming positive electrode active material layer 242 and positive electrode protective layer 243. Further, by compressing positive electrode active material layer 242, positive electrode raw plate 240S including positive electrode core body 241, positive electrode active material layer 242, and positive electrode protective layer 243 is formed. Positive electrode raw plate 240S is cut into a predetermined shape, thereby forming positive electrode plate 240. Positive electrode raw plate 240S can be cut by laser processing with application of an energy ray, die processing, cutter processing, or the like.

As shown in Fig. 12, a plurality of positive electrode tabs 260 each constituted of positive electrode core body 241 are provided at one end portion, in the width direction, of positive electrode plate 240 formed from positive electrode raw plate 240S. When positive electrode plate 240 is wound, the plurality of positive electrode tabs 260 are stacked to form second electrode tab 250. Thus, second electrode tab 250 is connected to positive electrode plate 240 (second electrode). The position of each of the plurality of positive electrode tabs 260 and the length thereof in the protruding direction are appropriately adjusted in consideration of the state in which second electrode tab 250 is connected to positive electrode current collector 400B. It should be noted that the shape of positive electrode tab 260 is not limited to the one illustrated in Fig. 12.

Positive electrode protective layer 243 is provided at the root of each of the plurality of positive electrode tabs 260. Positive electrode protective layer 243 may not necessarily be provided at the root of positive electrode tab 260.

In a typical example, the thickness of (one) negative electrode tab 230 is smaller than the thickness of (one) positive electrode tab 260. In this case, the thickness of first electrode tab 220 is smaller than the thickness of second electrode tab 250.

### (Connection Structure between Electrode Assembly 200 and Current Collector 400)

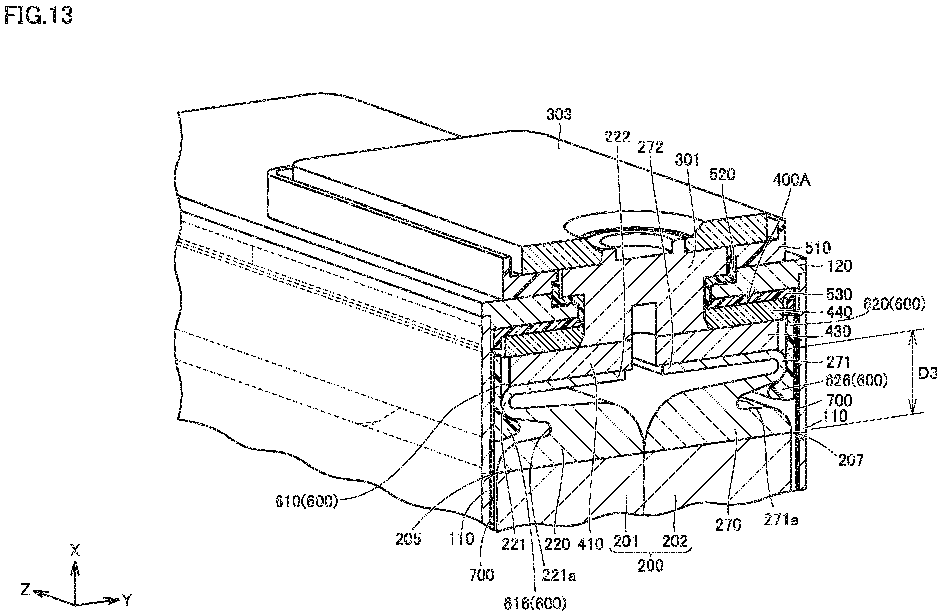

Fig. 13 is a cross sectional view of the secondary battery shown in Fig. 1 along XIII-XIII. As shown in Fig. 13, electrode assembly 200 includes first electrode assembly 201 and a second electrode assembly 202. Each of first electrode assembly 201 and second electrode assembly 202 includes a first electrode (negative electrode) and a second electrode (positive electrode). It should be noted that electrode assembly 200 may be constituted of three or more electrode assemblies.

Electrode assembly 200 is formed by overlapping first electrode assembly 201 and second electrode assembly 202 with each other. First electrode assembly 201 and second electrode assembly 202 are arranged side by side in the thickness direction (Y direction) of each of first electrode assembly 201 and second electrode assembly 202.

First electrode assembly 201 includes first electrode tab 220. First electrode tab 220 is electrically connected to the first electrode at its first end portion 205 in the X direction. Second electrode assembly 202 includes a third electrode tab 270.

Third electrode tab 270 is electrically connected to the first electrode at its third end portion 207 in the X direction.

First electrode tab 220 has a curved portion 221 (first curved portion) and a tip portion 222. Curved portion 221 (first curved portion) is a portion at which first electrode tab 220 is curved on the side, on which the first electrode is connected, with respect to tip portion 222. First electrode tab 220 is provided with a recess 221a (first recess), which is a recessed region facing a protrusion 616 (first protrusion) provided in spacer 600, and details of a configuration thereof will be described later. Tip portion 222 is a portion located at an end portion of first electrode tab 220 on the side opposite to the side on which the first electrode is connected.

Third electrode tab 270 has a curved portion 271 (third curved portion) and a tip portion 272. Curved portion 271 (third curved portion) is a portion at which third electrode tab 270 is curved on the side, on which the first electrode is connected, with respect to tip portion 272. Third electrode tab 270 is provided with a recess 271a (third recess), which is a recessed region facing a protrusion 626 (second protrusion) provided in spacer 600, and details of a configuration thereof will be described later. Tip portion 272 is a portion located at an end portion of third electrode tab 270 on the side opposite to the side on which the first electrode is connected.

First electrode tab 220 and third electrode tab 270 are curved in opposite directions such that tip portions 222, 272 are close to each other. It should be noted that tip portions 222, 272 are separated from each other in the present embodiment; however, it is not limited to this configuration, and tip portions 222, 272 may be in contact with each other.

Negative electrode current collector 400A electrically connects negative electrode terminal 301 to first electrode tab 220 and third electrode tab 270. Negative electrode current collector 400A in the present embodiment is connected to negative electrode terminal 301 between electrode assembly 200 and first sealing plate 120.

Negative electrode current collector 400A includes a first current collector 410, a third current collector 430, and a first-electrode-terminal-side current collector 440.

First current collector 410 is a plate-shaped member. First current collector 410 has a long-side direction in the Z direction and a short-side direction in the Y direction. Third current collector 430 is a plate-shaped member. Third current collector 430 has a long-side direction in the Z direction and a short-side direction in the Y direction. First current collector 410 and third current collector 430 are arranged side by side in parallel in the X direction. In this way, first current collector 410 and third current collector 430 are constituted of separate components.

First electrode tab 220 is joined to first current collector 410 at a joining location 411 described later. Third electrode tab 270 is joined to third current collector 430 at a joining location 431 described later. Joining locations 411, 431 can be formed by, for example, ultrasonic welding, resistance welding, laser welding, swaging, or the like. In the present embodiment, first electrode tab 220 and first current collector 410 are joined by ultrasonic joining, and third electrode tab 270 and third current collector 430 are joined by ultrasonic joining, for example.

First-electrode-terminal-side current collector 440 is joined to each of first current collector 410 and third current collector 430 at a joining location (not shown) located at its end portion in the Z direction. First-electrode-terminal-side current collector 440 is connected to negative electrode terminal 301. The connection between first-electrode-terminal-side current collector 440 and negative electrode terminal 301 can be formed by, for example, swaging and/or welding.

Negative electrode terminal 301 is provided to be exposed to the outside of first sealing plate 120 and reach first-electrode-terminal-side current collector 440 of negative electrode current collector 400A provided on the inner surface side of first sealing plate 120. Negative electrode terminal 301 is connected to a first plate portion 303.

First plate portion 303 is located on the outer side with respect to first sealing plate 120. First plate portion 303 is disposed along first sealing plate 120. First plate portion 303 has electric conductivity. First plate portion 303 is disposed to secure an area of connection with a bus bar or the like that electrically connects secondary battery 1 and another secondary battery adjacent thereto. The connection between negative electrode terminal 301 and first plate portion 303 can be formed by, for example, laser welding.

A first insulating member 510 is disposed between first plate portion 303 and first sealing plate 120. A second insulating member 520 is disposed between negative electrode terminal 301 and first sealing plate 120. A third insulating member 530 is disposed between first-electrode-terminal-side current collector 440 and first sealing plate 120.

It should be noted that negative electrode terminal 301 may be electrically connected to first sealing plate 120. Further, first sealing plate 120 may serve as negative electrode terminal 301.

Spacer 600 (first spacer) is disposed between first sealing plate 120 and electrode assembly 200. This spacer 600 suppresses a large amount of movement of electrode assembly 200 in case 100. Spacer 600 is composed of a resin member having an insulating property. Spacer 600 includes a first component 610 and a second component 620. First component 610 and second component 620 are engaged with each other at engagement portions (not shown) at both ends in the Z direction.

First component 610 is provided with protrusion 616 (first protrusion) protruding to the second component 620 side in the Y direction and located at its end portion side on the electrode assembly 200 side in the X direction. Second component 620 is provided with protrusion 626 (second protrusion) protruding to the first component 610 side in the Y direction and located at its end portion side on the electrode assembly 200 side in the X direction. Since protrusion 616 (first protrusion) and protrusion 626 (second protrusion) are provided, spacer 600 functions as a guide to facilitate curving of curved portion 221 (first curved portion) and curved portion 271 (third curved portion) when forming curved portion 221 (first curved portion) and curved portion 271 (third curved portion). It should be noted that a detailed structure of spacer 600 will be described later.

Insulating sheet 700 composed of a resin is disposed between electrode assembly 200 and case main body 110. More specifically, spacer 600 is covered with insulating sheet 700 such that insulating sheet 700 covers electrode assembly 200 and also surrounds the side walls of spacer 600 on the case main body 110 side. Further, insulating sheet 700 is connected to spacer 600 by a method described later.

Insulating sheet 700 may be composed of, for example, a resin. More specifically, the material of insulating sheet 700 is, for example, polypropylene (PP), polyethylene terephthalate (PET), polyphenylene sulfide (PPS), polyimide (PI), or polyolefin (PO).

Further, a third insulating member 530 is located between spacer 600 (first spacer) and first sealing plate 120. As a result, movement of spacer 600 (first spacer) to first sealing plate 120 can be regulated.

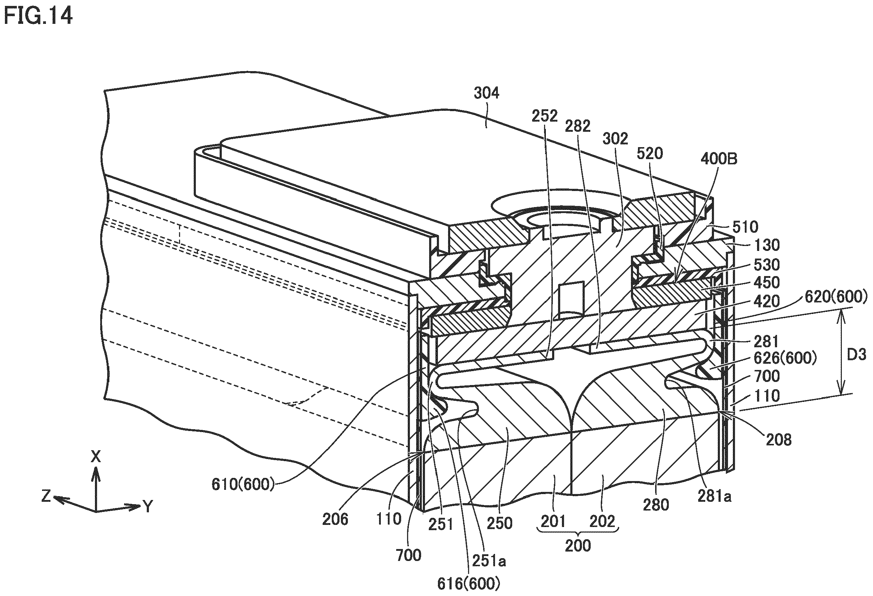

Fig. 14 is a cross sectional view of the secondary battery shown in Fig. 1 along XIV-XIV. The connection structure between electrode assembly 200 and current collector 400 on the second electrode (positive electrode) side of secondary battery 1 according to the present embodiment is different from that of the configuration on the first electrode (negative electrode) side in the following point: a portion corresponding to first current collector 410 and third current collector 430 on the first electrode (negative electrode) side is constituted of a single component.

First electrode assembly 201 includes second electrode tab 250. Second electrode tab 250 is electrically connected to the second electrode at its second end portion 206 in the X direction. Second electrode assembly 202 includes a fourth electrode tab 280. Fourth electrode tab 280 is electrically connected to the second electrode at its fourth end portion 208 in the X direction.

Second electrode tab 250 has a curved portion 251 (second curved portion) and a tip portion 252. Curved portion 251 (second curved portion) is a portion at which second electrode tab 250 is curved on the side, on which the second electrode is connected, with respect to tip portion 252. Second electrode tab 250 is provided with a recess 251a (second recess), which is a recessed region facing protrusion 616 (second protrusion) provided in spacer 600 (second spacer), and details of a configuration thereof will be described later. Tip portion 252 is a portion located at an end portion of second electrode tab 250 on the side opposite to the side on which the second electrode is connected.

Fourth electrode tab 280 has a curved portion 281 (fourth curved portion) and a tip portion 282. Curved portion 281 (fourth curved portion) is a portion at which fourth electrode tab 280 is curved on the side, on which the second electrode is connected, with respect to tip portion 282. Fourth electrode tab 280 is provided with a recess 281a (fourth recess), which is a recessed region facing protrusion 626 (fourth protrusion) provided in spacer 600, and details of a configuration thereof will be described later. Tip portion 282 is a portion located at an end portion of fourth electrode tab 280 on the side opposite to the side on which the second electrode is connected.

Second electrode tab 250 and fourth electrode tab 280 are curved in opposite directions such that tip portions 252, 282 are close to each other. It should be noted that tip portions 252, 282 are separated from each other in the present embodiment; however, it is not limited to this configuration, and tip portions 252, 282 may be in contact with each other.

Positive electrode current collector 400B electrically connects positive electrode terminal 302 to second electrode tab 250 and fourth electrode tab 280. Positive electrode current collector 400B in the present embodiment is connected to positive electrode terminal 302 between electrode assembly 200 and second sealing plate 130.

Positive electrode current collector 400B includes a second current collector 420 and a second-electrode-terminal-side current collector 450.

Second current collector 420 is a plate-shaped member. Second current collector 420 has a long-side direction in the Z direction and a short-side direction in the Y direction. Second current collector 420 is constituted of a single component in one piece.

Second electrode tab 250 and fourth electrode tab 280 are joined, at below-described joining locations 421, to second current collector 420 constituted of the single component. Each of joining locations 421 may be formed by ultrasonic welding, resistance welding, laser welding, swaging, or the like, for example. In the present embodiment, second electrode tab 250 and fourth electrode tab 280 are joined to second current collector 420 by ultrasonic joining, for example.

Second-electrode-terminal-side current collector 450 is joined to second current collector 420 at a joining location (not shown) located at its end portion in the Z direction. Second-electrode-terminal-side current collector 450 is connected to positive electrode terminal 302. The connection between second-electrode-terminal-side current collector 450 and positive electrode terminal 302 can be formed by, for example, swaging and/or welding.

Positive electrode terminal 302 is provided to be exposed to the outside of second sealing plate 130 and reach second-electrode-terminal-side current collector 450 of positive electrode current collector 400B provided on the inner surface side of second sealing plate 130. Positive electrode terminal 302 is connected to a second plate portion 304.

Second plate portion 304 is located on the outer side with respect to second sealing plate 130. Second plate portion 304 is disposed along second sealing plate 130. Second plate portion 304 has electric conductivity. Second plate portion 304 is disposed to secure an area of connection with a bus bar or the like that electrically connects secondary battery 1 and another secondary battery adjacent thereto. The connection between positive electrode terminal 302 and second plate portion 304 may be formed by, for example, laser welding.

A first insulating member 510 is disposed between second plate portion 304 and second sealing plate 130. A second insulating member 520 is disposed between positive electrode terminal 302 and second sealing plate 130. A third insulating member 530 is disposed between second-electrode-terminal-side current collector 450 and second sealing plate 130.

It should be noted that positive electrode terminal 302 may be electrically connected to second sealing plate 130. Further, second sealing plate 130 may serve as positive electrode terminal 302.

A spacer 600 (second spacer) is disposed between second sealing plate 130 and electrode assembly 200. This spacer 600 (second spacer) suppresses a large amount of movement of electrode assembly 200 in case 100. Spacer 600 is composed of a resin member having an insulating property. Spacer 600 includes a first component 610 and a second component 620. First component 610 and second component 620 are engaged with each other at engagement portions (not shown) at both ends in the Z direction.

Insulating sheet 700 (electrode assembly holder) composed of a resin is disposed between electrode assembly 200 and case main body 110.

Also on the second electrode (positive electrode) side of secondary battery 1, insulating sheet 700 (electrode assembly holder) composed of a resin is disposed between electrode assembly 200 and case main body 110. More specifically, spacer 600 (second spacer) is covered with insulating sheet 700 such that insulating sheet 700 covers electrode assembly 200 and also surrounds the side surfaces of spacer 600 (second spacer) on the case main body 110 side. Further, insulating sheet 700 is connected to spacer 600 by a method described later.

Further, third insulating member 530 is located between spacer 600 (second spacer) and second sealing plate 130. It should be noted that spacer 600 may be in abutment with third insulating member 530. Further, spacer 600 (second spacer) and second sealing plate 130 may be in abutment with each other.

### (Spacer 600)

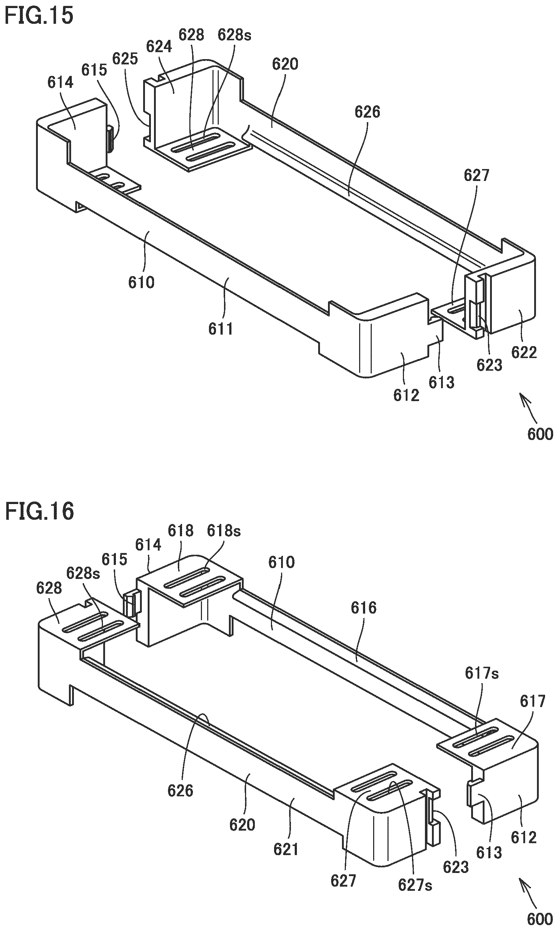

The detailed structure of spacer 600 will be described with reference to Figs. 15 and 16. Fig. 15 is a first perspective view showing an overall configuration of spacer 600, and Fig. 16 is a second perspective view when viewed from a side opposite to that in the first perspective view. The first perspective view is a diagram viewed from the first sealing plate 120 (second sealing plate 130) side when spacer 600 is disposed between first sealing plate 120 (second sealing plate 130) and electrode assembly 200.

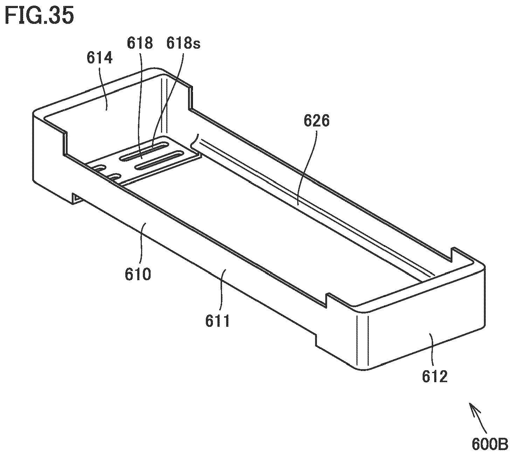

Spacer 600 is composed of a resin member having an insulating property. Spacer 600 includes first component 610 and second component 620. Spacer 600 is in the form of a loop in a state in which first component 610 and second component 620 are coupled to each other, and can be divided into two along the Y direction. Since spacer 600 is thus constituted of two components, spacer 600 is disposed to sandwich the electrode tabs. It should be noted that spacer 600 is not limited to being constituted of two components, and may be constituted of a single component as shown in Fig. 35 described later, or may be constituted of two or more components.

First component 610 has: a long side wall portion 611 extending in the Z direction; and a short side wall portion 612 and a short side wall portion 614 extending from respective end portions of long side wall portion 611 to the second component 620 side. A plate portion 617 is provided at a corner portion of a coupling portion between long side wall portion 611 and short side wall portion 612. Plate portion 617 is provided with through holes 617s each in the form of a slit. Similarly, a plate portion 618 is provided at a corner portion of a coupling portion between long side wall portion 611 and short side wall portion 614. Plate portion 618 is provided with through holes 618s each in the form of a slit. Protrusion 616 protruding to the second component 620 side in the Y direction is provided on an end portion side of long side wall portion 611 in the X direction.

Plate portion 617 and plate portion 618 described above are located on an end surface side of the electrode assembly. Each of these plate portions may be in abutment with the end surface of the electrode assembly, or when each of these plate portions is not in abutment with the end surface thereof, the shortest distance therebetween is preferably 2 mm or less, and is more preferably 1 mm or less.

Further, because through holes 618s are provided, when secondary battery 1 shown in Fig. 1 is placed with the Z direction corresponding to the upward direction (such a direction that first opening 113 and second opening 114 at the both ends of case main body 110 are arranged on the left and right), even if the electrolyte solution pushed out from the electrode assembly flows to outside of through holes 618s during charging (generally, the electrode plate is expanded), the electrolyte solution can be readily returned to inside of the electrode assembly during discharging (generally, the electrode plate is contracted).

Protrusion 616 constitutes a first protrusion in spacer 600 (first spacer) disposed between first sealing plate 120 and electrode assembly 200, and protrusion 616 constitutes a third protrusion in spacer 600 (second spacer) disposed between second sealing plate 130 and electrode assembly 200.

Second component 620 has: a long side wall portion 621 extending in the Z direction; and a short side wall portion 622 and a short side wall portion 624 extending from respective end portions of long side wall portion 621 to the first component 610 side. A plate portion 627 is provided at a corner portion of a coupling portion between long side wall portion 621 and short side wall portion 622. Plate portion 627 is provided with through holes 627s each in the form of a slit. Similarly, a plate portion 628 is provided at a corner portion of a coupling portion between long side wall portion 621 and short side wall portion 624. Plate portion 628 is provided with through holes 628s each in the form of a slit. Protrusion 626 protruding to the first component 610 side in the Y direction is provided on an end portion side of long side wall portion 621 in the X direction.

Plate portion 627 and plate portion 628 described above are located on an end surface side of the electrode assembly. Each of these plate portions may be in abutment with the end surface of the electrode assembly, or when each of these plate portions is not in abutment with the end surface, the shortest distance therebetween is preferably 2 mm or less, and is more preferably 1 mm or less. Further, because through holes 628s are provided, when secondary battery 1 shown in Fig. 1 is placed with the Z direction corresponding to the upward direction (such a direction that first opening 113 and second opening 114 at the both ends of case main body 110 are arranged on the left and right), even if the electrolyte solution pushed out from the electrode assembly flows to outside of through holes 628s during charging (generally, the electrode plate is expanded), the electrolyte solution can be readily returned to inside of the electrode assembly during discharging (generally, the electrode plate is contracted).

Protrusion 626 constitutes a second protrusion in spacer 600 (first spacer) disposed between first sealing plate 120 and electrode assembly 200, and protrusion 626 constitutes a fourth protrusion in spacer 600 (second spacer) disposed between second sealing plate 130 and electrode assembly 200.

An engaging claw 613 and an engaging groove 623 provided to be attachable to and detachable from each other are provided between short side wall portion 612 and short side wall portion 622. Similarly, an engaging claw 615 and an engaging groove 625 provided to be attachable to and detachable from each other are provided between short side wall portion 614 and short side wall portion 624.

It should be noted that when the thickness, in the X direction, of spacer 600 disposed on each of the first electrode tab 220 side and the third electrode tab 270 side (the thickness thereof on the negative electrode side) is compared with the thickness, in the X direction, of spacer 600 disposed on each of the second electrode tab 250 side and the fourth electrode tab 280 side (the thickness thereof on the positive electrode side), the thickness on the positive electrode side can be larger than the thickness on the negative electrode side. This is due to the following reason: since the thickness of the foil used for each of first electrode tab 220 and third electrode tab 270 is thin on the negative electrode side, a space between the electrode assembly and the sealing plate on the negative electrode side is smaller than that on the positive electrode side, thus resulting in improved efficiency in mounting the electrode assembly.

### (Manufacturing Process for Secondary Battery 1)

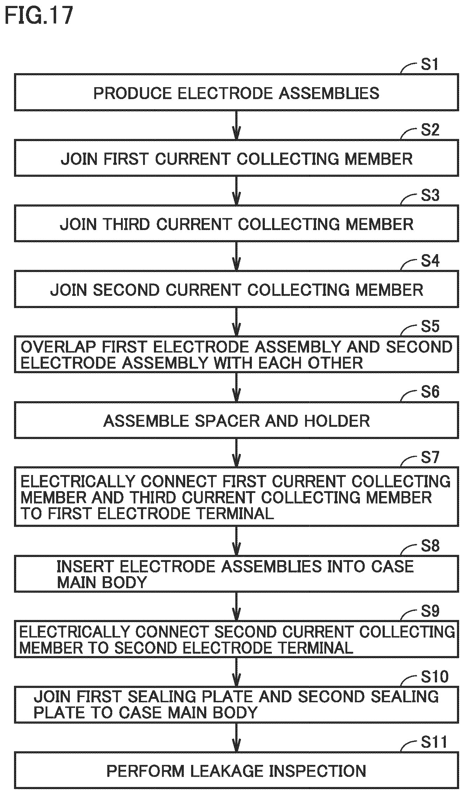

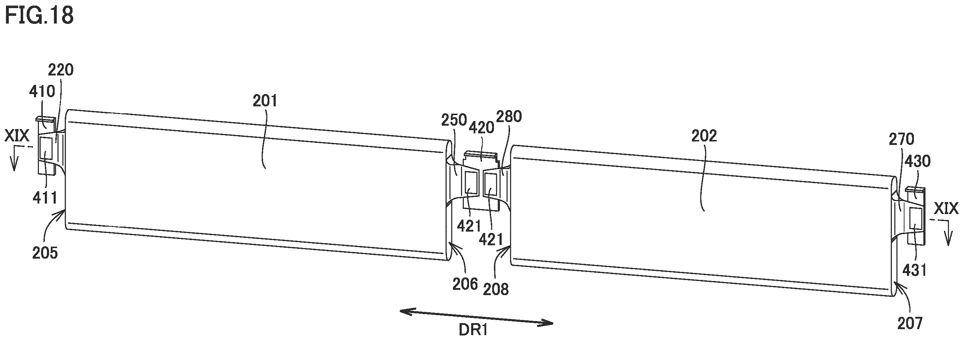

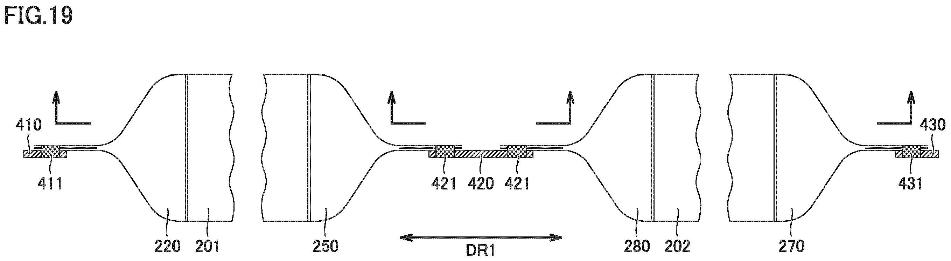

Hereinafter, a method of manufacturing the secondary battery according to the present embodiment will be described. Fig. 17 is a flowchart showing a method of manufacturing the secondary battery according to the first embodiment. Fig. 18 is a perspective view showing a state before two electrode assemblies included in the secondary battery according to the first embodiment are overlapped with each other. Fig. 19 is a cross sectional view of each of the electrode assemblies and the current collectors shown in Fig. 18 along XIX-XIX.

As shown in Fig. 17, in the method of manufacturing the secondary battery according to the present embodiment, first, first electrode assembly 201 and second electrode assembly 202 are produced (step S1). Part of the tips of first electrode tab 220, second electrode tab 250, third electrode tab 270, and fourth electrode tab 280 are cut such that they have the same tip length when bundled.

As shown in Figs. 17 to 19, after producing first electrode assembly 201 and second electrode assembly 202, first electrode tab 220 is joined to first current collector 410 (step S2). First electrode tab 220 is joined to first current collector 410 at joining location 411. Next, third electrode tab 270 is joined to third current collector 430 (step S3). Third electrode tab 270 is joined to third current collector 430 at joining location 431.

Next, first electrode assembly 201, second current collector 420, and second electrode assembly 202 are disposed side by side in this order in a first direction (DR1 direction). Second electrode tab 250 is disposed on one side with respect to second current collector 420 in the first direction (DR1 direction). Second electrode tab 250 and fourth electrode tab 280 are joined to second current collector 420 with fourth electrode tab 280 being disposed on the other side with respect to second current collector 420 in the first direction (DR1 direction) (step S4). Second electrode tab 250 and fourth electrode tab 280 are joined to second current collector 420 at joining locations 421.

In the height direction of each of first electrode assembly 201 and second electrode assembly 202, each of first current collector 410, second current collector 420 and third current collector 430 is disposed on one side with respect to the center of each of first electrode assembly 201 and second electrode assembly 202. Thus, each of the current collectors can be formed to be short, thereby reducing the size of the current collector.

It should be noted that each of first current collector 410, second current collector 420, and third current collector 430 is not limited to this configuration. In the height direction of each of first electrode assembly 201 and second electrode assembly 202, each of first current collector 410, second current collector 420, and third current collector 430 may be disposed at the center of a corresponding one of first electrode assembly 201 and second electrode assembly 202. In this case, in the height direction of each of first electrode assembly 201 and second electrode assembly 202, each of first electrode tab 220, second electrode tab 250, third electrode tab 270, and fourth electrode tab 280 is disposed at the center of a corresponding one of first electrode assembly 201 and second electrode assembly 202 so as to correspond to a corresponding one of first current collector 410, second current collector 420, and third current collector 430.

Further, the order of the steps of joining first current collector 410, second current collector 420 and third current collector 430 to first electrode assembly 201 and second electrode assembly 202 is not limited to the one described above, and the order may be changed. Each of the respective steps of joining first current collector 410 and third current collector 430 to first electrode assembly 201 and second electrode assembly 202 is preferably performed before the below-described step of overlapping first electrode assembly 201 and second electrode assembly 202 with each other, and is preferably performed before the step of joining second current collector 420 to first electrode assembly 201 and second electrode assembly 202.

Next, after joining second electrode tab group 250 and fourth electrode tab group 280 to second current collector 420, second electrode tab group 250 and fourth electrode tab group 280 are bent in the thickness direction (direction orthogonal to the DR1 direction in Figs. 16 and 17) of each of first electrode assembly 201 and second electrode assembly 202, thereby overlapping first electrode assembly 201 and second electrode assembly 202 with each other (step S5). That is, first electrode assembly 201 and second electrode assembly 202 are collected together.

Regarding the expression "overlapping the first electrode assembly and the second electrode assembly with each other", the first electrode assembly and the second electrode assembly may be overlapped with each other directly, or another member may be disposed between the first electrode assembly and the second electrode assembly. Further, the first electrode assembly and the second electrode assembly may or may not be fixed by a tape or the like. Further, the first electrode assembly, the second current collector, and the second electrode assembly may not be disposed on a straight line in the first direction (DR1 direction), and the first electrode assembly or the second electrode assembly may be inclined with respect to the second current collector in the first direction (DR1 direction).

By overlapping first electrode assembly 201 and second electrode assembly 202 with each other, second electrode tab 250 and fourth electrode tab 280 are bent to come close to each other with respect to second current collector 420. Similarly, first electrode tab group 220 and third electrode tab group 270 are also bent such that tip portions thereof face each other.

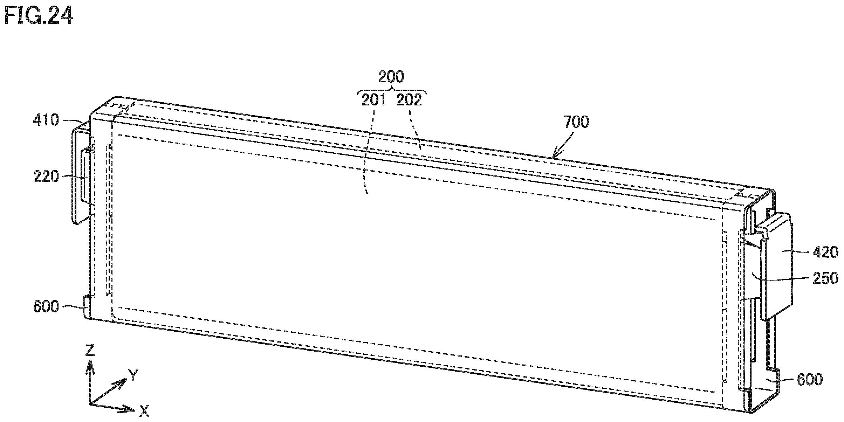

Each of Figs. 17 and 20 to 24 is a perspective view showing a state of attaching a holder and a spacer to the electrode assembly. As shown in Fig. 24, next, spacer 600 and insulating sheet 700 are assembled to electrode assembly 200 (step S6).

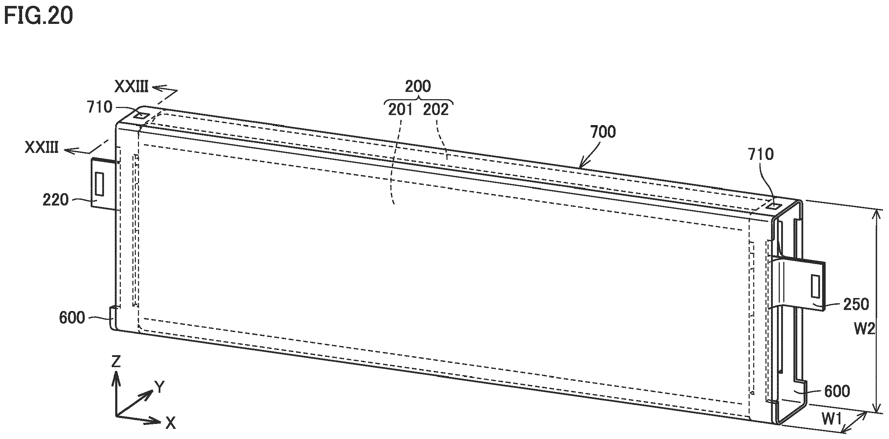

As shown in Fig. 20, spacer 600 is covered with insulating sheet 700 such that insulating sheet 700 covers a whole of the outer perimeter of electrode assembly 200 and also surrounds the side surfaces of spacer 600 (each of the first spacer and the second spacer) on the case main body 110 side. Further, insulating sheet 700 is connected to spacer 600 by fixing means 710.

Since the whole of the perimeter of spacer 600 is thus covered with insulating sheet 700, the electrode tabs are covered with insulating sheet 700. As a result, when inserting electrode assembly 200 covered with insulating sheet 700 into case main body 110, the electrode tabs can be protected, thereby suppressing unintended damage of the electrode tabs or the like.

Here, when a length W1 of each of spacer 600 (each of the first spacer and the second spacer) and electrode assembly 200 in the thickness direction and a length W2 of each of spacer 600 and electrode assembly 200 in the height direction are compared, one of the thickness and height of the spacer may be smaller than a corresponding one of the thickness and height of electrode assembly 200. Thus, electrode assembly 200 is fixed by insulating sheet 700, thus resulting in improved insertability of electrode assembly 200 into case 110.

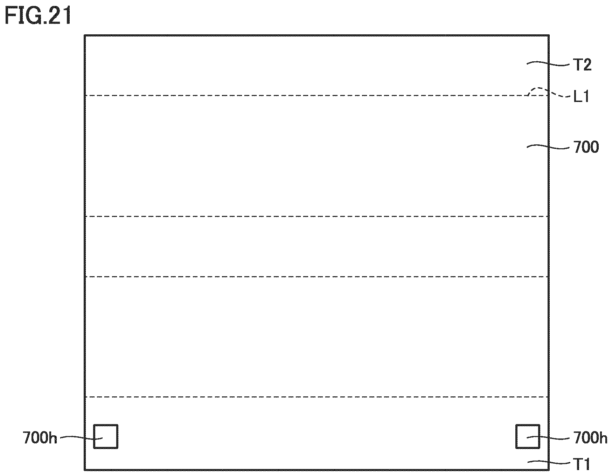

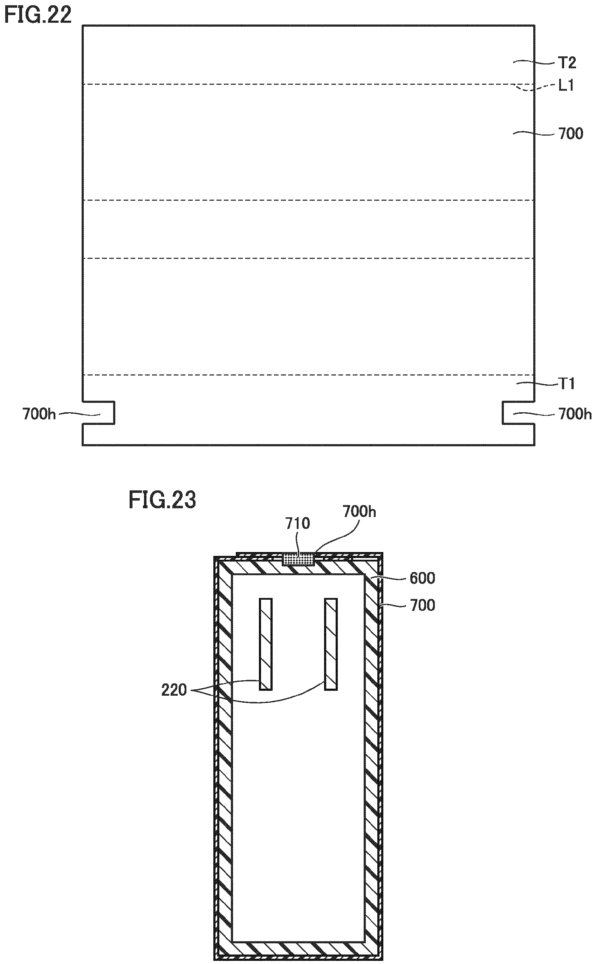

A form of insulating sheet 700 will be described with reference to Figs. 21 to 23. Fig. 21 is a diagram showing a state in which insulating sheet 700 is unfolded, Fig. 22 is a diagram showing a state in which an insulating sheet 700 of another embodiment is unfolded, and Fig. 23 is a cross sectional view along XXIII-XXIII shown in Fig. 20.

Insulating sheet 700 has a rectangular shape in an unfolded state, and a folding line L1 may be provided in advance at a position corresponding to a corner portion of electrode assembly 200 when wound around the outer surface of electrode assembly 200.

When insulating sheet 700 is wound around the outer surface of electrode assembly 200, one side end portion region T1 and the other side end portion region T2 of insulating sheet 700 may be overlapped with each other on the second-electrode-assembly-side surface 200S2 side of electrode assembly 200 facing the second side surface portion 112 side of case main body 110 shown in Figs. 3 and 4 among the side surfaces of electrode assembly 200, second-electrode-assembly-side surface 200S2 having a smaller area than that of a first electrode assembly side surface 200S1 of electrode assembly 200 facing the first side surface portion 111 side of case main body 110.

Further, side end portion region T1 is provided with openings 700h for fixing side end portion region T1 to side end portion region T2 when overlapped with side end portion region T2. It should be noted that each of openings 700h is illustrated to have a rectangular shape in the figure, but is not limited to having a rectangular shape, and may have any other opening shape such as a circular shape. Further, as shown in Fig. 22, opening 700h may have a notched shape.

Referring to Fig. 23, these openings 700h are used to fix side end portion region T1 and side end portion region T2 to spacer 600 through fixing means 710 such as welding, ultrasonic joining, tape adhering, adhering with an adhesive agent, fitting, or hooking. As fixing means 710, the welding or the ultrasonic joining are particularly preferable. Insulating sheet 700 is preferably fixed to spacer 600 only at a region around opening 700h and a clearance is preferably provided at the overlapping region between one side end portion region T1 and the other side end portion region T2. Further, a clearance is also preferably provided between spacer 600 and insulating sheet 700. This is because each of these clearances serves as a path for discharging gas in case 100 to outside when pressure in case 100 becomes equal to or more than a predetermined value. Therefore, insulating sheet 700 is preferably fixed to spacer 600 such that one side end portion region T1 and the other side end portion region T2 are overlapped with each other at second side surface portion 112B in which joining portion 115 is provided.

It should be noted that insulating sheet 700 does not necessarily need to cover a whole of the surfaces of electrode assembly 200. Insulating sheet 700 preferably covers an area of about 50% or more, more preferably about 70% or more, of the outer surfaces of the electrode assembly. Insulating sheet 700 preferably covers a whole of at least four surfaces of the six surfaces of electrode assembly 200 having a substantially rectangular parallelepiped shape (flat shape) other than the two surfaces thereof on which first electrode tab 220 and second electrode tab 250 are formed respectively.

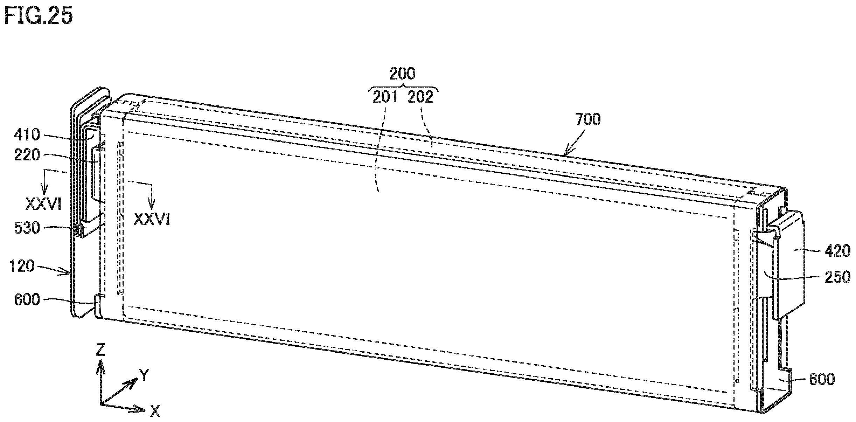

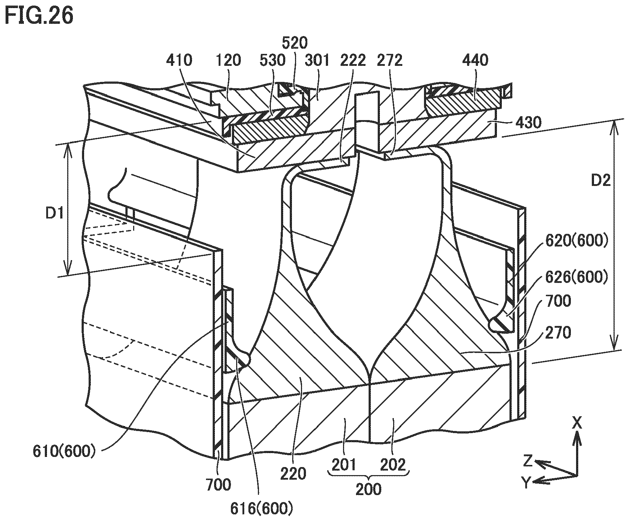

Fig. 25 is a perspective view showing a state of attaching the first sealing plate to the first current collector. Fig. 26 is a cross sectional view of each of the electrode assemblies and the current collectors shown in Fig. 25 along XXVI-XXVI.

Negative electrode terminal 301 and first-electrode-terminal-side current collector 440 are attached to first sealing plate 120 with second insulating member 520 and third insulating member 530 being interposed therebetween. It should be noted that the connecting of first plate portion 303 to negative electrode terminal 301 may be performed at any timing.

As shown in Figs. 17, 25, and 26, first current collector 410 and third current collector 430 are electrically connected to negative electrode terminal 301 via first-electrode-terminal-side current collector 440 after joining first electrode tab 220 to first current collector 410, joining third electrode tab 270 to third current collector 430, and overlapping first electrode assembly 201 and second electrode assembly 202 with each other (step S7/connecting step). Since negative electrode terminal 301 is fixed to first sealing plate 120 with second insulating member 520 being interposed therebetween, first electrode tab 220 and third electrode tab 270 are connected to first sealing plate 120.

It should be noted that step S7 can be performed before step S6. By performing step S7 before step S6, negative electrode terminal 301 and each of first electrode tab 220 and third electrode tab 270 can be more stably connected to each other when electrically connecting them. Further, a configuration with a smaller space between first sealing plate 120 and the main body portion of electrode assembly 200 can be readily attained.

First-electrode-terminal-side current collector 440 attached to first sealing plate 120 is brought into abutment with first current collector 410 and third current collector 430 in the X direction. First-electrode-terminal side current collector 440 is joined to first current collector 410 and third current collector 430 by performing laser welding from between first sealing plate 120 and insulating sheet 700.

On this occasion, an outer side of a fringe portion of first electrode tab 220 may be a position in abutment with protrusion 616 provided in spacer 600. Similarly, an outer side of a fringe portion of third electrode tab 270 may be a position in abutment with protrusion 626 provided in spacer 600.

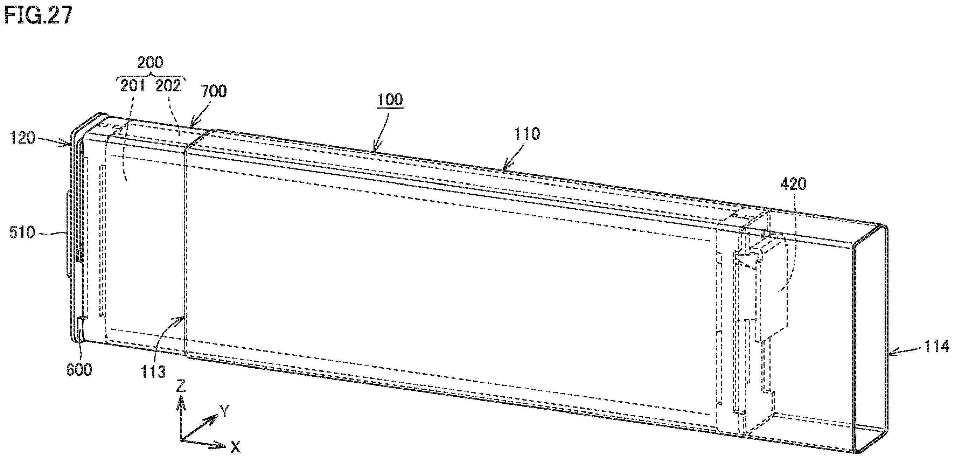

Fig. 27 is a perspective view showing a state of inserting the electrode assemblies into the case main body. As shown in Figs. 17 and 27, next, after overlapping first electrode assembly 201 and second electrode assembly 202 with each other, first electrode assembly 201 and second electrode assembly 202 are inserted into case main body 110 via first opening 113 with the second current collector 420 side being inserted first (step S8).

First electrode tab group 220 and third electrode tab group 270 are curved by bringing first sealing plate 120 close to the main body portion of electrode assembly 200 (first electrode assembly 201 and second electrode assembly 202). It should be noted that first sealing plate 120 and case main body 110 are preferably brought close to each other by bringing first sealing plate 120 close to the main body portion of electrode assembly 200 disposed in case main body 110. As shown in Fig. 13, first electrode tab 220 is curved in the following manner: first electrode tab 220 facing protrusion 616 (first recess) that is in abutment with the fringe portion of first electrode tab 220 is recessed inward at protrusion 616 serving as a starting point of curving so as to bend first electrode tab 220, thereby forming curved portion 221 (first curved portion). Similarly, third electrode tab 270 is curved in the following manner: third electrode tab 270 facing protrusion 626 (second protrusion) that is in abutment with the fringe portion of third electrode tab 270 is recessed inward at protrusion 626 serving as a starting point of curving so as to bend third electrode tab 270, thereby forming curved portion 271 (second curved portion). As shown in Fig. 13, first electrode tab 220 and third electrode tab 270 are preferably curved to be substantially symmetrical to each other.

After bringing first sealing plate 120 into abutment with case main body 110, first sealing plate 120 is temporarily joined to case main body 110. By the temporary joining, first sealing plate 120 is partially joined to first opening 113 of case main body 110. Thus, first sealing plate 120 is positioned with respect to case main body 110.

When inserting electrode assembly 200 into case main body 110, electrode assembly 200 may be pulled from the second current collector 420 side, or may be pushed from each of the first current collector 410 side and the third current collector 430 side. When electrode assembly 200 is pressed from each of the first current collector 410 side and the third current collector 430 side, first electrode tab 220 and third electrode tab 270 can be curved at the same time.

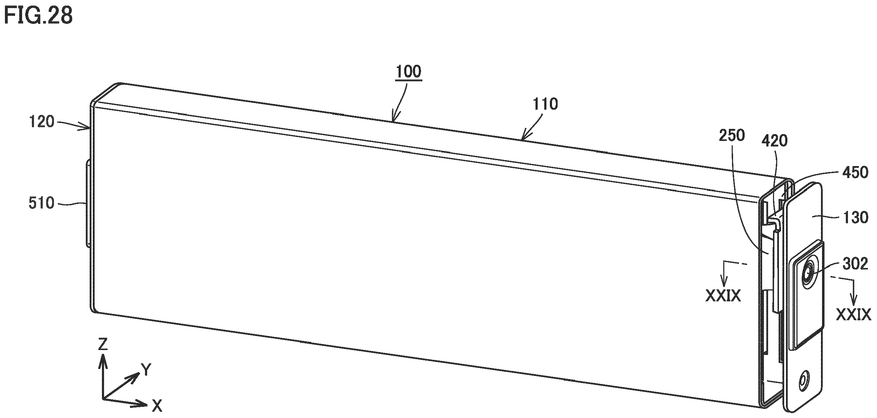

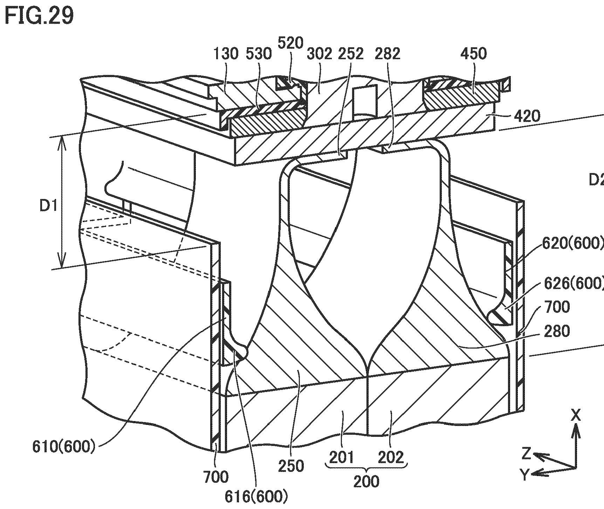

Fig. 28 is a perspective view showing a state of attaching the second sealing plate to the second current collector. Fig. 29 is a cross sectional view of each of the electrode assemblies and the current collectors shown in Fig. 28 along XXIX-XXIX. It should be noted that in Fig. 29, case main body 110 is not shown.

As shown in Figs. 17, 28, and 29, next, second current collector 420 is electrically connected to positive electrode terminal 302 after inserting first electrode assembly 201 and second electrode assembly 202 into case main body 110 (step S9).

Specifically, each of positive electrode terminal 302 and second-electrode-terminal-side current collector 450 is attached to second sealing plate 130 with an insulating member being interposed therebetween. Second-electrode-terminal-side current collector 450 is brought into abutment with second current collector 420 in the X direction. Second-electrode-terminal-side current collector 450 is joined to second current collector 420 by performing laser welding from between second sealing plate 130 and insulating sheet 700. It should be noted that the connecting of second plate portion 304 to positive electrode terminal 302 may be performed at any timing.

As shown in Fig. 29, second electrode tab 250 and fourth electrode tab 280 are bent to bring the electrode tabs from an extended state into a state in which the electrode tabs are curved in opposite directions such that tip portions 252, 282 located at their end portions on the side opposite to the side on which the second electrode is connected are close to each other. As a result, they are bent symmetrically in the same manner. Specifically, second electrode tab 250 is brought into contact with protrusion 616 (third protrusion) provided in spacer 600 (second spacer) and is gradually bent at protrusion 616 (third protrusion) serving as a starting point of curving so as to bring second electrode tab 250 from an extended state into a curved state, with the result that second electrode tab 250 is curved and bent to be provided with a recess at a position facing protrusion 616. Similarly, fourth electrode tab 280 is brought into contact with protrusion 626 (fourth protrusion) provided in spacer 600 (first spacer) and is gradually bent at protrusion 626 serving as a starting point of curving so as to bring fourth electrode tab 280 from an extended state into a curved state, with the result that fourth electrode tab 280 is curved and bent to be provided with a recess at a position facing protrusion 626. As a result, they are bent symmetrically in the same manner.

Second electrode tab 250 and fourth electrode tab 280 are curved by bringing second sealing plate 130 close to the main body portion of electrode assembly 200. On this occasion, second sealing plate 130 and case main body 110 come close to each other. As shown in Fig. 14, second electrode tab 250 is curved in the following manner: second electrode tab 250 facing protrusion 616 (third protrusion) that is in abutment with the fringe portion of second electrode tab 250 is recessed inward at protrusion 616 serving as a starting point of curving so as to bend second electrode tab 250, thereby forming curved portion 251 (first curved portion). Similarly, fourth electrode tab 280 is curved in the following manner: fourth electrode tab 280 facing protrusion 626 (fourth protrusion) that is in abutment with the fringe portion of fourth electrode tab 280 is recessed inward at protrusion 626 serving as a starting point of curving so as to bend fourth electrode tab 280, thereby forming curved portion 281 (second curved portion).

After first sealing plate 120 is brought into abutment with case main body 110, second sealing plate 130 is temporarily welded to case main body 110. By the temporary joining, second sealing plate 130 is partially joined to second opening 114 of case main body 110. Thus, second sealing plate 130 is positioned with respect to case main body 110.

It should be noted that a distance D1 shown in Figs. 26 and 29 from the end surface of the case main body to a portion of the sealing plate to be brought into abutment with the end surface of the case main body is preferably 20 mm or less, is more preferably 15 mm or less, and is further preferably 10 mm or less. In the extended state of each electrode tab, a distance D2 from the current collector to the end portion of the electrode assembly (root of the electrode tab) is preferably 40 mm or less, is more preferably 30 mm or less, and is further preferably 20 mm or less.

Further, a distance D3 shown in Figs. 13 and 14 from the current collector to the end portion of the electrode assembly (root of the electrode tab) in a state in which the sealing plate and the case main body are in abutment with each other is preferably 15 mm or less, is more preferably 10 mm or less, and is further preferably 5 mm or less. With such a configuration, a battery having a higher volume energy density can be obtained.

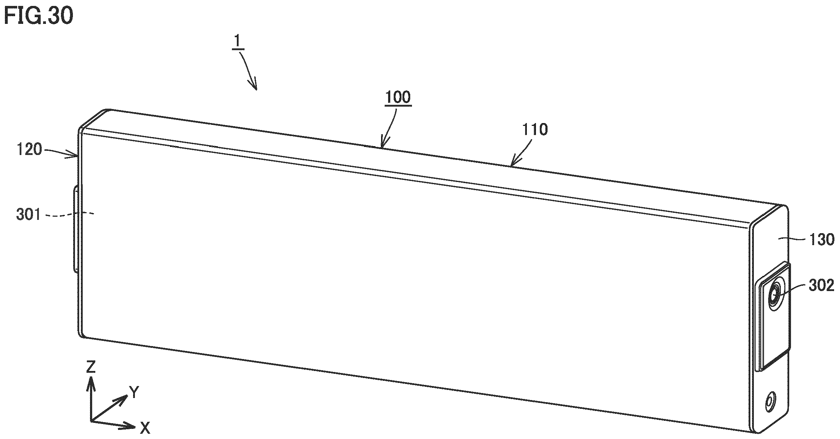

Fig. 30 is a perspective view showing the configuration of the secondary battery according to the first embodiment. As shown in Figs. 17 and 30, next, first sealing plate 120 and second sealing plate 130 are joined to case main body 110 (step S10). First sealing plate 120 seals first opening 113 of case main body 110, and second sealing plate 130 seals second opening 114 of case main body 110. Thus, first electrode assembly 201 and second electrode assembly 202 are accommodated in case 100.

After the above-described steps, an inspection such as a leakage inspection is performed (step S11). After the leakage inspection, secondary battery 1 is dried to remove moisture in case 100. Then, the electrolyte solution is injected into case 100 through injection hole 134. When injecting the electrolyte solution, case 100 is inclined with second sealing plate 130 facing upward and first sealing plate 120 facing downward, thereby injecting the electrolyte solution into case 100 via injection hole 134 of second sealing plate 130. Thereafter, charging is performed to result in release of gas. For performing the charging to result in release of gas, injection hole 134 may be temporarily sealed. Thereafter, the injection hole is sealed, thereby completing secondary battery 1.

In each of the method of manufacturing secondary battery 1 and secondary battery 1 according to the first embodiment of the present technology, first electrode assembly 201, second current collector 420 constituted of a single component, and second electrode assembly 202 are arranged side by side in this order in the first direction (DR1 direction), second electrode tab 250 and fourth electrode tab 280 respectively formed in first electrode assembly 201 and second electrode assembly 202 are joined to second current collector 420, and then first electrode assembly 201 and second electrode assembly 202 are overlapped with each other in the thickness direction. Thus, the separate electrode tabs can be formed in first electrode assembly 201 and second electrode assembly 202, and second electrode tab 250 and fourth electrode tab 280 can be bent to form first electrode assembly 201 and second electrode assembly 202. With this configuration, the electrode tabs can be shortened as compared with a case where one collective electrode tab is formed by first electrode assembly 201 and second electrode assembly 202 and the electrode tab is bent. Further, with this configuration, it is possible to reduce the length of each tab as compared with the case where second electrode tab 250 and fourth electrode tab 280 in first electrode assembly 201 and second electrode assembly 202 after overlapping them with each other are each connected to second current collector 420. As a result, the occupied volume of the electrode tabs can be reduced, thereby improving the energy density of secondary battery 1. Further, in the case of forming first electrode assembly 201 and second electrode assembly 202 by forming separate electrode tabs for first electrode assembly 201 and second electrode assembly 202 and bending the electrode tabs, since the electrode tabs are readily bent as compared with a case where one collective electrode tab is formed by first electrode assembly 201 and second electrode assembly 202, the electrode tabs and the current collectors can be readily joined, thereby stably manufacturing the secondary battery. In particular, since secondary battery 1 can be stably manufactured, reliability of the connection portion between each of the electrode tabs and each of the current collectors can be increased.

In the method of manufacturing secondary battery 1 according to the first embodiment of the present technology, after second electrode tab 250 and fourth electrode tab 280 are joined by second current collector 420, first electrode assembly 201 and second electrode assembly 202 are inserted into case main body 110 from the second current collector 420 side on which second electrode tab 250 and fourth electrode tab 280 are joined and collected, with the result that electrode assembly 200 can be readily inserted into case main body 110.

Further, since spacer 600 is provided with protrusion 616 to be brought into abutment with each of the fringe portion of first electrode tab 220 and the fringe portion of second electrode tab 250 and is provided with protrusion 626 to be brought into abutment with each of the fringe portion of third electrode tab 270 and the fringe portion of fourth electrode tab 280, each of the electrode tabs facing the protrusions that are in abutment with the fringe portions is recessed inward at a corresponding one of the protrusions serving as a starting point of curving, with the result that the electrode tab can be readily guided to be bent and folded in an appropriate direction.

Further, since the whole of the perimeter of spacer 600 is covered with insulating sheet 700, the electrode tabs are covered with insulating sheet 700. As a result, when electrode assembly 200 covered with insulating sheet 700 is inserted into case main body 110, the electrode tabs are protected to suppress unintended damage of the electrode tabs or the like, with the result that a secondary battery having high reliability can be provided.

In each of the method of manufacturing secondary battery 1 and secondary battery 1 according to the first embodiment of the present technology, electrode assembly 200 including first electrode assembly 201 and second electrode assembly 202 with the separate electrode tabs being formed in first electrode assembly 201 and second electrode assembly 202 and the separate electrode tabs being each bent can be applied to case main body 110 provided with first opening 113 and second opening 114 located at its end portion on the side opposite to first opening 113. Thus, when first opening 113 and second opening 114 of case main body 110 are arranged side by side in the horizontal direction, the height of secondary battery 1 can be low.

In each of the method of manufacturing secondary battery 1 and secondary battery 1 according to the first embodiment of the present technology, first electrode tab 220 and third electrode tab 270 are curved in the opposite directions such that the tip portions 222, 272 located at the end portions thereof on the side opposite to the side on which the first electrode is connected are close to each other, thus resulting in such a configuration that the electrode tabs can be readily shaped from the outside in the thickness direction of the electrode assembly.

In each of the method of manufacturing secondary battery 1 and secondary battery 1 according to the first embodiment of the present technology, since the electrode tabs can be connected by second current collector 420 constituted of a single component in one piece, it is possible to reduce the number of connection locations of constituent members and increase reliability of the connection portions between the electrode tabs and the current collectors as compared with a case where separate current collectors are respectively connected to the electrode tabs of first electrode assembly 201 and second electrode assembly 202.

Hereinafter, secondary batteries according to second to fifth embodiments will be described. Since the secondary battery according to each of these embodiments is different from secondary battery 1 according to the first embodiment of the present technology in terms of the configuration of the spacer, the same configurations as those of secondary battery 1 according to the first embodiment of the present technology will not be described repeatedly.

### (Second Embodiment)

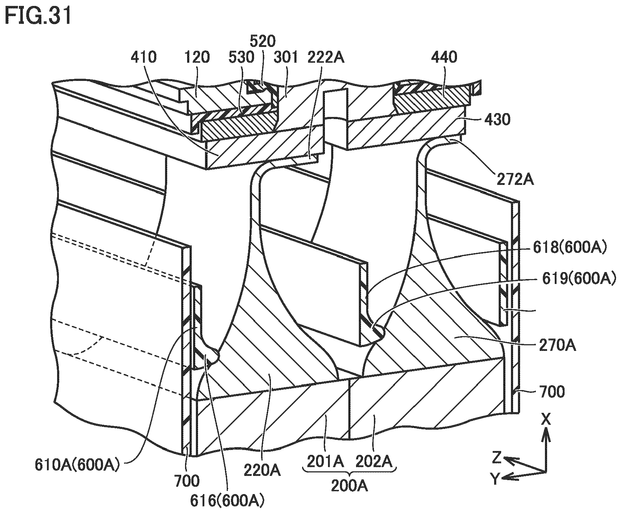

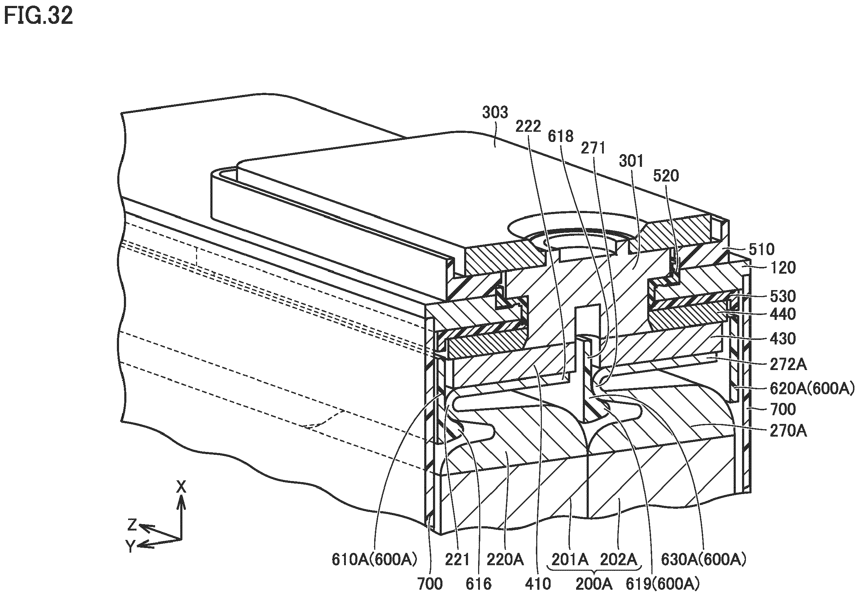

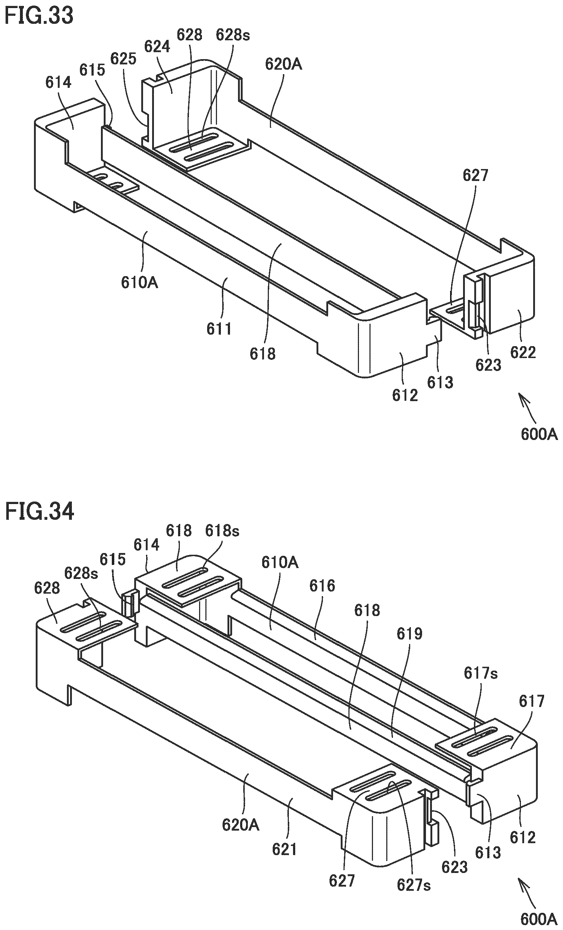

Referring to Figs. 31 to 34, a configuration of a secondary battery according to a second embodiment will be described. Fig. 31 is a cross sectional view corresponding to the cross section of each of the electrode assemblies and the current collectors shown in Fig. 25 along XXVI-XXVI, Fig. 32 is a cross sectional view showing a state of bending the electrode tabs, Fig. 33 is a first perspective view showing an overall configuration of a spacer, and Fig. 34 is a second perspective view showing the overall configuration of the spacer.

Referring to Fig. 31, in the secondary battery according to the second embodiment, tip portions 222A, 272A of a first electrode tab 220A and a third electrode tab 270A are bent in the same direction in the Y direction.

Thereafter, a first electrode assembly 201A and a second electrode assembly 202A are inserted into the case main body, and first sealing plate 120 is brought into abutment with the case main body. Since first sealing plate 120 and the case main body are brought close to each other, first electrode tab 220A and third electrode tab 270A are bent to bring the electrode tabs from an extended state into a state in which they are curved in the same direction. As a result, tip portions 222A, 272A are oriented in the same direction and the electrode tabs arranged side by side are bent in the same manner. Specifically, first electrode tab 220A is gradually bent at protrusion 616 (first protrusion) provided in spacer 600 (first spacer) and serving as a starting point of curving so as to bring first electrode tab 220A from an extended state into a curved state, with the result that first electrode tab 220A is curved and bent to be provided with a recess at a position facing protrusion 616. Similarly, third electrode tab 270A is bent gradually at protrusion 619 (second protrusion) provided in spacer 600A (first spacer) and serving as a starting point of curving so as to bring third electrode tab 270A into an extended state into a curved state, with the result that third electrode tab 270A is curved and bent to be provided with a recess at a position facing protrusion 619. As a result, the electrode tabs arranged side by side are bent in the same manner.

In order to facilitate curving of tip portions 222A, 272A in the same direction, spacer 600A is provided with an intermediate side wall 650 between first electrode tab 220A and third electrode tab 270A, intermediate side wall 650 extending in the Z direction, intermediate side wall 650 being located between long side wall portion 611 and long side wall portion 621. A protrusion 619 (third protrusion) protruding to the second component 620 side in the Y direction is provided on an end portion side of intermediate side wall 650 in the X direction. On the other hand, long side wall portion 621 on the second component 620 side is provided with no protrusion.

When tip portions 222A, 272A of first electrode tab 220A and third electrode tab 270A are curved in the same direction in the Y direction, first electrode assembly 201A having first electrode tab 220A to which first current collector 410 is joined and second electrode assembly 202 having third electrode tab 270A to which third current collector 430 is joined can be configured as electrode assemblies 200A of one type.

As shown in Fig. 32, in the state in which first electrode tab 220A and third electrode tab 270A are bent, first electrode tab 220A has curved portion 221 (first curved portion) and tip portion 222. First electrode tab 220A is provided with recess 221a (first recess), which is a recessed region facing protrusion 616 provided in spacer 600A.

Third electrode tab 270A has curved portion 271 (second curved portion) and tip portion 272. Third electrode tab 270A is provided with recess 271a (third recess), which is a recessed region facing protrusion 619 provided in spacer 600A.

It should be noted that although not shown, the above description applies to the connection structure between the electrode assembly and the current collector on the second electrode (positive electrode) side of the secondary battery as shown in Figs. 14 and 29. Therefore, second electrode tab 250A and fourth electrode tab 280A are bent to bring the electrode tabs from an extended state into a state in which they are curved in the same direction such that tip portions thereof located at an end portion opposite to the side on which the second electrode is connected are oriented in the same direction. As a result, the electrode tabs arranged side by side are bent in the same manner such that tip portions 222A, 272A are oriented in the same direction. Specifically, second electrode tab 250A is gradually bent at protrusion 616 (third protrusion) provided in spacer 600 (second spacer) and serving as a starting point of curving so as to bring second electrode tab 250A from the extended state into the curved state, with the result that second electrode tab 250A is curved and bent to be provided with a recess at a position facing protrusion 616. Similarly, fourth electrode tab 280A is gradually bent at protrusion 616 (fourth protrusion) provided in spacer 600 (first spacer) and serving as a starting point of curving so as to bring fourth electrode tab 280A from the extended state to the curved state, with the result that fourth electrode tab 280A is curved and bent to be provided with a recess at a position facing protrusion 616. As a result, the electrode tabs arranged side by side are bent in the same manner such that tip portions 222A, 272A are oriented in the same direction.

### (Spacer 600A)

A detailed structure of spacer 600A will be described with reference to Figs. 33 and 34. It should be noted that the same portions as those of spacer 600 in the first embodiment are denoted by the same reference characters and the same explanation will not be described repeatedly.

A basic configuration of spacer 600A is the same as that of spacer 600 in the first embodiment, but first component 610 is provided with intermediate side wall 650 located at a position between long side wall portion 611 and long side wall portion 621 and extending in the Z direction. Protrusion 651 (third protrusion) protruding to the second component 620 side in the Y direction is provided on an end portion side of intermediate side wall 650 in the X direction. On the other hand, long side wall portion 621 on the second component 620 side is provided with no protrusion.

By employing spacer 600A having such a configuration, intermediate side wall 650 having protrusion 651 (third protrusion) can be located between first electrode tab 220A and third electrode tab 270A.

### (Third Embodiment)

A spacer 600B according to another embodiment will be described with reference to Fig. 35. It should be noted that the same portions as those of spacer 600 in the first embodiment are denoted by the same reference characters and the same explanation will not be described repeatedly.

Spacer 600 described in the first embodiment has a two-component structure including first component 610 and second component 620 that can be divided from each other; however, spacer 600B shown in Fig. 35 is constituted of only a single component in the form of a loop. Spacer 600B is in the form of a loop such that both sides of short side walls 632, 634 are coupled to each other by long side wall portion 611 and long side wall portion 621. This form of loop can also be employed in spacer 600A of the second embodiment.

Also when spacer 600B having such a configuration is employed, the same functions and effects as those of the first and second embodiments can be obtained.

### (Fourth Embodiment)

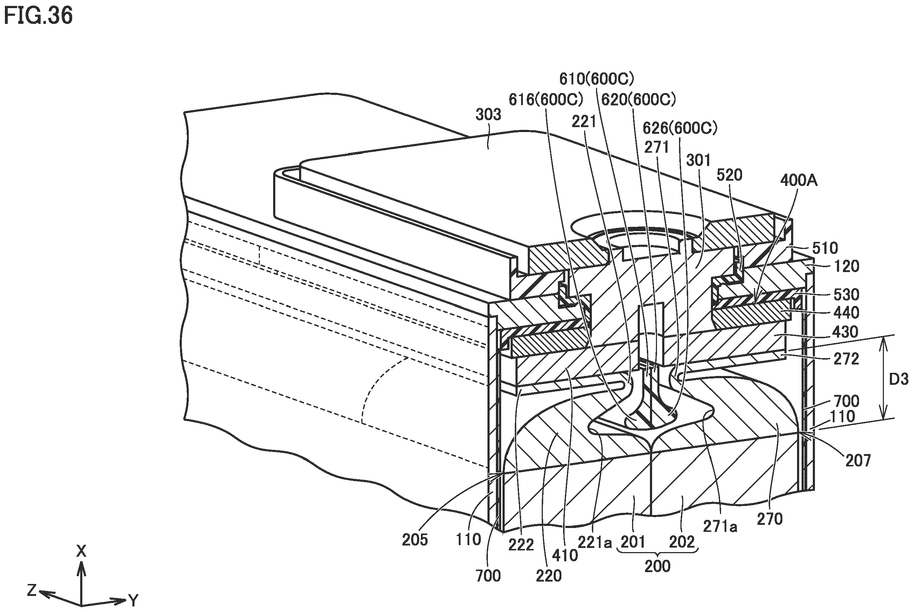

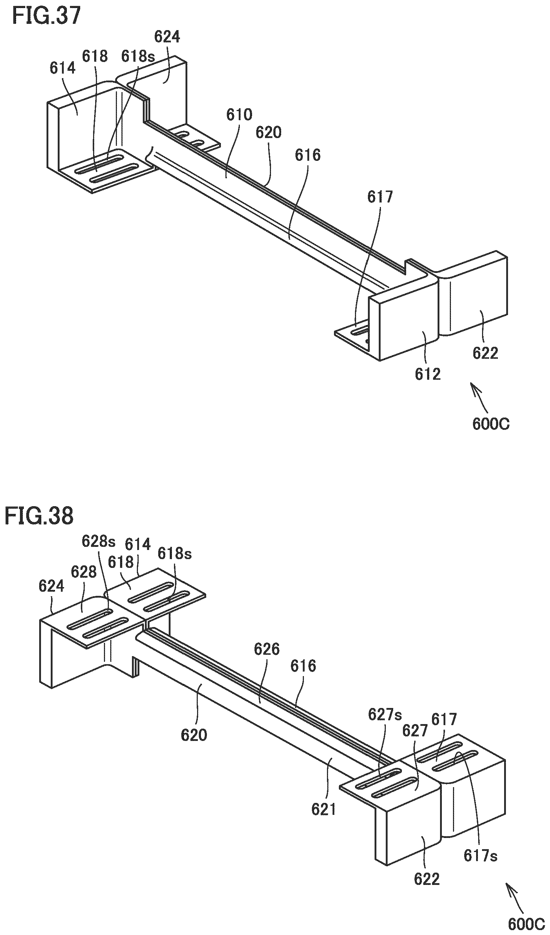

A connection structure between electrode assembly 200 and current collector 400 using a spacer 600C according to another embodiment will be described with reference to Figs. 36 to 38. Fig. 36 is a cross sectional view corresponding to XIII-XIII of the secondary battery shown in Fig. 1, and Figs. 37 and 38 are first and second perspective views each showing an overall configuration of spacer 600C.

It should be noted that Fig. 36 shows a connection structure between electrode assembly 200 and current collector 400 on the first electrode (negative electrode) side of secondary battery 1. A connection structure between electrode assembly 200 and current collector 400 on the second electrode (positive electrode) side of secondary battery 1 has the same electrode tab configuration as shown in Figs. 13 and 14, and therefore will not described here. Further, regarding designations of portions of spacer 600C, the same portions as those of spacer 600 shown in Figs. 15 and 16 are denoted by the same reference characters and the same explanation will not be described repeatedly.

In spacer 600C according to the present embodiment, first component 610 and second component 620 are disposed at a central portion with their respective backs facing each other, with the result that protrusion 616 and protrusion 626 are provided to extend outward from the central portion.

First electrode tab 220 and third electrode tab 270 are bent to bring the electrode tabs from an extended state into a state in which they are curved in opposite directions such that tip portions 222, 272 located at the end portions thereof opposite to the side on which the first electrode is connected are oriented in the opposite directions. Specifically, first electrode tab 220 is gradually bent at protrusion 616 (first protrusion) provided in spacer 600 (first spacer) and serving as a starting point of curving so as to bring first electrode tab 220 from the extended state into the curved state, with the result that first electrode tab 220 is curved and bent to be provided with a recess recessed at a position facing protrusion 616. Similarly, third electrode tab 270 is gradually bent at protrusion 626 (second protrusion) provided in spacer 600 (first spacer) and serving as a starting point of curving so as to bring third electrode tab 270 from the extended state into the curved state, with the result that third electrode tab 270 is curved and bent to be provided with a recess at a position facing protrusion 626. As a result, they are symmetrically bent in the same manner (opposite to the manner of bending as shown in Fig. 13).

Also when spacer 600C having such a configuration is employed, the same functions and effects as those of the first and second embodiments can be obtained.

It should be noted that as shown in Figs. 18 and 19, each of the above-described embodiments employs the configuration in which first electrode assembly 201, second current collector 420 constituted of a single component, and second electrode assembly 202 are arranged side by side in this order in the first direction (DR1 direction), second electrode tab 250 and fourth electrode tab 280 respectively formed on first electrode assembly 201 and second electrode assembly 202 are joined to second current collector 420, and then first electrode assembly 201 and second electrode assembly 202 are overlapped with each other in the thickness direction; however, the configuration is not limited to this configuration. There may be employed a configuration in which second electrode tab 250 and fourth electrode tab 280 are respectively joined to separate current collectors and first electrode assembly 201 and second electrode assembly 202 in an unconnected state are overlapped with each other in the thickness direction. In this case, each of the negative electrode side and the positive electrode side has the structure shown in Fig. 13.

### (Fifth Embodiment)

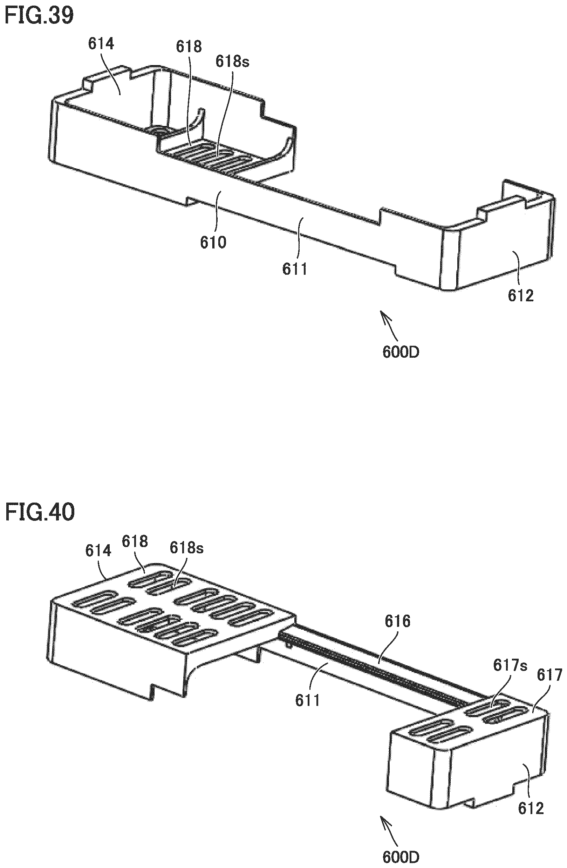

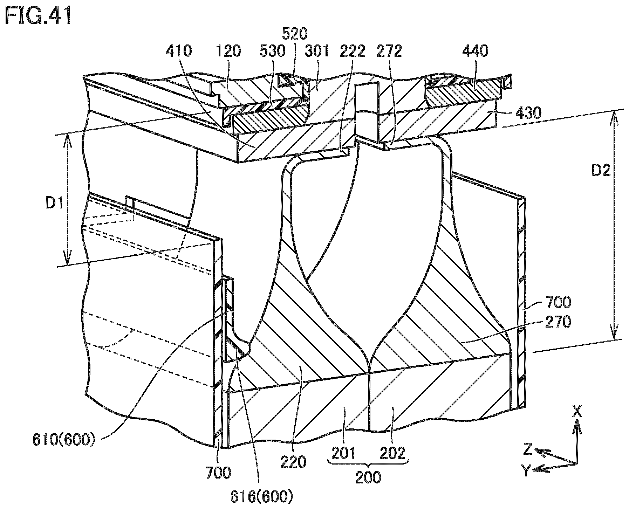

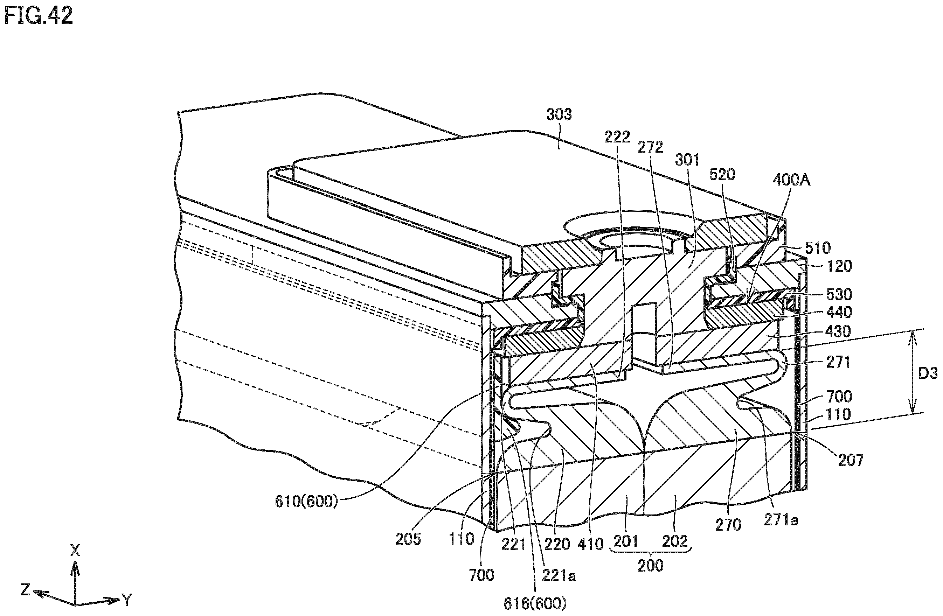

A configuration of a secondary battery according to a fifth embodiment will be described with reference to Figs. 39 to 42. Fig. 39 is a first perspective view showing an overall configuration of a spacer, Fig. 40 is a second perspective view showing the overall configuration of the spacer, Fig. 41 is a cross sectional view corresponding to the cross section of each of the electrode assemblies and the current collectors shown in Fig. 25 along XXIV-XXIV, and Fig. 42 is a cross sectional view corresponding to the cross section of the secondary battery shown in Fig. 1 along XIII-XIII.

The fifth embodiment is different from the first embodiment in terms of the shape of the spacer, the method of curving third electrode tab 270, and the method of curving fourth electrode tab 280. It should be noted that the other configurations and methods can be the same as those in the first embodiment. Hereinafter, the fifth embodiment will be described by illustratively describing first electrode tab 220 and third electrode tab 270; however, the same configurations and methods can be applied to each of the second electrode tab 250 side and the fourth electrode tab 280 side.

As shown in Figs. 39 and 40, a spacer 600D of the fifth embodiment has a long side wall portion 611 having a protrusion 616 only on the side facing first electrode tab 220. In spacer 600D, long side wall portion 611 and protrusion 616 are not formed on the side facing third electrode tab 270. The size of each of plate portions 617, 618 and the number of through holes 617s, 618s are different from those of spacer 600 described above, but they have the same functions.

As shown in Figs. 41 and 42, long side wall portion 611 having protrusion 616 provided only on one side of spacer 600D is disposed on the outer side with respect to first electrode tab 220. In this state, first sealing plate 120 and electrode assembly 200 are brought close to each other, thereby curving each of first electrode tab 220 and third electrode tab 270 into a predetermined shape. On this occasion, it is preferable to bring protrusion 616 into abutment with first electrode tab 220. It should be noted that a jig (that does not remain in the battery case when the secondary battery is completed) is preferably brought into abutment with third electrode tab 270 so as to curve third electrode tab 270 into a predetermined shape.

With the configuration of the fifth embodiment, spacer 600D can be readily assembled to electrode assembly 200, and each of first electrode tab 220 and third electrode tab 270 can be curved into a preferable state.

It should be noted that when a large part or whole of each of first electrode tab 220 and third electrode tab 270 is located on the outer side with respect to the first opening of case main body 110, it is also considered to bring the jig into abutment with third electrode tab 270 so as to curve third electrode tab 270.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A secondary battery (1) comprising:
an electrode assembly (200, 200A) including a first electrode and a second electrode having a polarity different from a polarity of the first electrode; and
a case (100) that accommodates the electrode assembly (200, 200A), wherein
the case (100) includes a case main body (110) provided with a first opening (113) at one end portion of the case main body (110), and a first sealing plate (120) that seals the first opening (113),
the electrode assembly (200, 200A) has a first electrode tab (220, 220A) and a third electrode tab (270, 270A) that are each electrically connected to the first electrode and that are each located at an end portion of the electrode assembly (200, 200A) on the first sealing plate (120) side,
the first electrode tab (220, 220A) and the third electrode tab (270, 270A) are electrically connected to the first electrode in a state in which each of the first electrode tab (220, 220A) and the third electrode tab (270, 270A) is curved,
the first electrode tab (220, 220A) is provided with a first recess (221a, 251a, 271a, 281a) recessed in the state in which the first electrode tab (220, 220A) is curved,
the third electrode tab (270, 270A) is provided with a third recess (221a, 251a, 271a, 281a) recessed in the state in which the third electrode tab (270, 270A) is curved,
a first spacer (600, 600A, 600B, 600C) is disposed in the first opening (113) of the case main body (110) between the first sealing plate (120) and the electrode assembly (200, 200A),
the first spacer (600, 600A, 600B, 600C) is provided with a first protrusion (616, 619, 626, 651) facing the first electrode tab (220, 220A), and
the first protrusion (616, 619, 626, 651) is located to face the first recess (221a, 251a, 271a, 281a).

2. The secondary battery (1) according to claim 1, wherein
the first recess (221a, 251a, 271a, 281a) is provided in an outer surface of the first electrode tab (220, 220A) on the case main body (110) side,
the third recess (221a, 251a, 271a, 281a) is provided in an outer surface of the third electrode tab (270, 270A) on the case main body (110) side,
the first spacer (600, 600A, 600B, 600C) is located between the case main body (110) and the first electrode tab (220, 220A), and
the first spacer (600, 600A, 600B, 600C) is not located between the case main body (110) and the third electrode tab (270, 270A).

3. The secondary battery (1) according to claim 1 or 2, wherein the first electrode tab (220, 220A) and the third electrode tab (270, 270A) are electrically connected to the first electrode in a state in which the first electrode tab (220, 220A) and the third electrode tab (270, 270A) are curved in opposite directions.

4. The secondary battery (1) according to any one of claims 1 to 3, wherein
the first spacer (600, 600A, 600B, 600C) is provided with a second protrusion (616, 619, 626, 651) facing the third electrode tab (270, 270A), and
the second protrusion (616, 619, 626, 651) is located to face the second recess (221a, 251a, 271a, 281a).

5. The secondary battery (1) according to claim 4, wherein
the first recess (221a, 251a, 271a, 281a) is provided in an outer surface of the first electrode tab (220, 220A) on the case main body (110) side,
the third recess (221a, 251a, 271a, 281a) is provided in an outer surface of the third electrode tab (270, 270A) on the case main body (110) side, and
the first spacer (600, 600A, 600B, 600C) is located between the case main body (110) and the first electrode tab and is located between the case main body (110) and the third electrode tab (270, 270A).

6. The secondary battery (1) according to any one of claims 1 to 5, wherein
the first recess (221a, 251a, 271a, 281a) is provided in an outer surface of the first electrode tab (220, 220A) on the third electrode tab (270, 270A) side,
the third recess (221a, 251a, 271a, 281a) is provided in an outer surface of the third electrode tab (270, 270A) on the first electrode tab (220, 220A) side, and
the first spacer (600, 600A, 600B, 600C) is disposed between the first electrode tab (220, 220A) and the third electrode tab (270, 270A).

7. The secondary battery (1) according to any one of claims 1 to 6, wherein
the first electrode tab (220, 220A) has a first curved portion (221, 251, 271, 281) in an outer surface of the first electrode tab (220, 220A) in which the first recess (221a, 251a, 271a, 281a) is formed, the first curved portion (221, 251, 271, 281) being located on the first sealing plate (120) side with respect to the first recess (221a, 251a, 271a, 281a), and
the third electrode tab (270, 270A) has a second curved portion (221, 251, 271, 281) in an outer surface of the third electrode tab (270, 270A) in which the third recess (221a, 251a, 271a, 281a) is formed, the second curved portion (221, 251, 271, 281) being located on the first sealing plate (120) side with respect to the third recess (221a, 251a, 271a, 281a).

8. The secondary battery (1) according to any one of claims 1 to 7, wherein
the electrode assembly (200, 200A) and the first spacer (600, 600A, 600B, 600C) are wrapped by an insulating sheet, and
the insulating sheet is connected to the first spacer (600, 600A, 600B, 600C).

9. The secondary battery (1) according to any one of claims 1 to 8, wherein
the case (100) includes a second sealing plate (130),
the case main body (110) is provided with a second opening (114) at an end portion of the case main body (110) opposite to the first opening (113),
the second opening (114) is sealed by the second sealing plate (130),
the electrode assembly (200, 200A) has a second electrode tab (250) and a fourth electrode tab (280) that are each electrically connected to the second electrode and that are each located at an end portion of the electrode assembly (200, 200A) on the second sealing plate (130) side, and
the second electrode tab (250) and the fourth electrode tab (280) are electrically connected to the second electrode in a state in which each of the second electrode tab (250) and the fourth electrode tab (280) is curved.

10. The secondary battery (1) according to claim 9, wherein
the second electrode tab (250) is provided with a second recess (221a, 251a, 271a, 281a) recessed in the state in which the second electrode tab (250) is curved,
the fourth electrode tab (280) is provided with a fourth recess (221a, 251a, 271a, 281a) recessed in the state in which the fourth electrode tab (280) is curved,
a second spacer (600, 600A, 600B, 600C) is disposed in the second opening (114) of the case main body (110) between the second sealing plate (130) and the electrode assembly (200, 200A),
the second spacer (600, 600A, 600B, 600C) is provided with a second protrusion (616, 619, 626, 651) facing the second electrode tab (250) and a fourth protrusion (616, 619, 626, 651) facing the fourth electrode tab (280),
the second protrusion (616, 619, 626, 651) is located to face the second recess (221a, 251a, 271a, 281a), and
the fourth protrusion (616, 619, 626, 651) is located to face the fourth recess (221a, 251a, 271a, 281a).

11. A method of manufacturing a secondary battery (1),
the secondary battery (1) comprising:
an electrode assembly (200, 200A) including a first electrode and a second electrode having a polarity different from a polarity of the first electrode; and
a case (100) that accommodates the electrode assembly (200, 200A), wherein
the case (100) includes a case main body (110) provided with a first opening (113) at one end portion of the case main body (110), and a first sealing plate (120) that seals the first opening (113),
the electrode assembly (200, 200A) includes a first electrode tab (220, 220A) and a third electrode tab (270, 270A) that are each electrically connected to the first electrode and that are each located at an end portion of the electrode assembly (200, 200A) on the first sealing plate (120) side,
the first electrode tab (220, 220A) and the third electrode tab (270, 270A) are electrically connected to the first electrode in a state in which each of the first electrode tab (220, 220A) and the third electrode tab (270, 270A) is curved,
the first electrode tab (220, 220A) is provided with a first recess (221a, 251a, 271a, 281a) recessed in the state in which the first electrode tab (220, 220A) is curved,
the third electrode tab (270, 270A) is provided with a third recess (221a, 251a, 271a, 281a) recessed in the state in which the third electrode tab (270, 270A) is curved,
a first spacer (600, 600A, 600B, 600C) is disposed in the first opening (113) of the case main body (110) between the first sealing plate (120) and the electrode assembly (200, 200A),
the first spacer (600, 600A, 600B, 600C) is provided with a first protrusion (616, 619, 626, 651) facing the first electrode tab (220, 220A), and
the first protrusion (616, 619, 626, 651) is located to face the first recess (221a, 251a, 271a, 281a),
the method comprising:
connecting the first electrode tab (220, 220A) and the third electrode tab (270, 270A) to the first sealing plate (120); and
by bringing the first sealing plate (120) and the main body portion of the electrode assembly (200, 200A) close to each other after the connecting the first electrode tab (220, 220A) and the third electrode tab (270, 270A) to the first sealing plate (120), curving the first electrode tab (220, 220A) to form the first recess (221a, 251a, 271a, 281a) and curving the third electrode tab (270, 270A) to form the third recess (221a, 251a, 271a, 281a).

12. The method of manufacturing the secondary battery (1) according to claim 11, wherein
in the curving the first electrode tab (220, 220A) and curving the third electrode tab (270, 270A),
the first recess (221a, 251a, 271a, 281a) is formed with the first protrusion (616, 619, 626, 651) of the first spacer (600, 600A, 600B, 600C) being in contact with the first electrode tab (220, 220A).

13. The method of manufacturing the secondary battery (1) according to claim 11 or 12, wherein
the first spacer (600, 600A, 600B, 600C) is provided with a second protrusion (616, 619, 626, 651) facing the third electrode tab (270, 270A), and
in the curving the first electrode tab (220, 220A) and curving the third electrode tab (270, 270A),
the second recess (221a, 251a, 271a, 281a) is formed with the second protrusion (616, 619, 626, 651) of the first spacer (600, 600A, 600B, 600C) being in contact with the third electrode tab (270, 270A).

14. The method of manufacturing the secondary battery (1) according to any one of claims 11 to 13, wherein
in the curving the first electrode tab (220, 220A) and curving the third electrode tab,
the second recess (221a, 251a, 271a, 281a) is formed with a jig being in contact with the third electrode tab (270, 270A).

15. The method of manufacturing the secondary battery (1) according to any one of claims 11 to 14, comprising disposing the first spacer (600, 600A, 600B, 600C) on an end surface of the electrode assembly (200, 200A) on a side on which the first electrode tab (220, 220A) and the third electrode tab (270, 270A) are provided, and covering the electrode assembly (200, 200A) and the first spacer (600, 600A, 600B, 600C) with an insulating sheet.

16. The method of manufacturing the secondary battery (1) according to any one of claims 11 to 15, wherein
the secondary battery (1) is configured such that
the case (100) includes a second sealing plate (130),
the case main body (110) is provided with a second opening (114) at an end portion of the case main body (110) opposite to the first opening (113),
the second opening (114) is sealed by the second sealing plate (130),
the electrode assembly (200, 200A) has a second electrode tab (250) and a fourth electrode tab (280) that are each electrically connected to the second electrode and that are each located at an end portion of the electrode assembly (200, 200A) on the second sealing plate (130) side,
the second electrode tab (250) and the fourth electrode tab (280) are electrically connected to the second electrode in a state in which each of the second electrode tab (250) and the fourth electrode tab (280) is curved,
the second electrode tab (250) is provided with a second recess (221a, 251a, 271a, 281a) recessed in the state in which the second electrode tab (250) is curved,
the fourth electrode tab (280) is provided with a fourth recess (221a, 251a, 271a, 281a) recessed in the state in which the fourth electrode tab (280) is curved,
a second spacer (600, 600A, 600B, 600C) is disposed in the second opening (114) of the case main body (110) between the second sealing plate (130) and the electrode assembly (200, 200A),
the second spacer (600, 600A, 600B, 600C) is provided with a second protrusion (616, 619, 626, 651) facing the second electrode tab (250), and
the second protrusion (616, 619, 626, 651) is located to face the second recess (221a, 251a, 271a, 281a),
the method comprising curving the second electrode tab (250) with the second protrusion (616, 619, 626, 651) of the second spacer (600, 600A, 600B, 600C) being in contact with the second electrode tab (250).

17. The method of manufacturing the secondary battery (1) according to claim 16, comprising:
connecting the second electrode tab (250) and the fourth electrode tab (280) to the second sealing plate (130); and
after the connecting the second electrode tab (250) and the fourth electrode tab (280) to the second sealing plate (130), inserting the electrode assembly (200, 200A) into the case main body (110) via the second opening (114) of the case main body (110) with each of the first electrode tab (220, 220A) side and the third electrode tab (270, 270A) side being inserted first in a state in which the first sealing plate (120), the first electrode tab (220, 220A), and the third electrode tab (270, 270A) are not connected.
